(19) Europäisches Patentamt
European Patent Office
Office européen des brevets

(11) EP 4 703 425 A1

(12) EUROPEAN PATENT APPLICATION
published in accordance with Art. 153(4) EPC

(43) Date of publication:
**04.03.2026 Bulletin 2026/10**

(21) Application number: **23935444.2**

(22) Date of filing: **04.12.2023**

(51) International Patent Classification (IPC):
***C08L 9/06*** *(2006.01)* ***B60C 1/00*** *(2006.01)*
***C08K 3/36*** *(2006.01)* ***C08K 5/544*** *(2006.01)*
***C08L 7/00*** *(2006.01)*

(52) Cooperative Patent Classification (CPC):
Y02T 10/86

(86) International application number:
**PCT/JP2023/043332**

(87) International publication number:
**WO 2024/224673 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.04.2023 JP 2023075279**

(71) Applicant: **BRIDGESTONE CORPORATION**
**Chuo-ku**
**Tokyo 104-8340 (JP)**

(72) Inventor: **KAWASHIMA Masahiro**
**Tokyo 104-8340 (JP)**

(74) Representative: **Marks & Clerk LLP**
**15 Fetter Lane**
**London EC4A 1BW (GB)**

# (54) TIRE RUBBER COMPOSITION, TREAD RUBBER, AND TIRE

(57) An object of the present disclosure is to provide a rubber composition for tires capable of achieving an excellent balance among high fuel efficiency, wet braking performance, and wear resistance performance, and the solution is a rubber composition for tires including a rubber component and a filler. The rubber component includes at least an isoprene skeleton rubber and a styrene-butadiene rubber. The filler includes at least silica. The following formula (X) and the following formula (Y) are satisfied:

$$10 \leq A^{0.5}+B^{1.5} \leq 100 \ \ldots \ (X)$$

(where A is a content (parts by mass) of the isoprene skeleton rubber in 100 parts by mass of the rubber component, and B is a bound styrene content (mass%) of the styrene-butadiene rubber), and $0.55 \leq C/D \leq 0.75$ ... (Y) (where C is a content (parts by mass) of the silica relative to 100 parts by mass of the rubber component, and D is a content (parts by mass) of the filler relative to 100 parts by mass of the rubber component).

EP 4 703 425 A1

**Description**

TECHNICAL FIELD

The present disclosure relates to a rubber composition for tires, a tread rubber, and a tire.

BACKGROUND

Conventionally, in order to achieve both high fuel efficiency and wet braking performance, rubber compositions for tires containing silica have been proposed.

For example, PTL 1 discloses that by applying a rubber composition comprising a rubber component containing 70 mass% or more of natural rubber, a thermoplastic resin, and a filler comprising silica to the tread rubber of a tire, the braking performance of the tire on both dry and wet road surfaces is improved.

Furthermore, from the viewpoint of tire economy, in the development of rubber compositions for tires, it is also required to improve wear resistance performance in addition to high fuel efficiency and wet braking performance.

CITATION LIST

Patent Literature

PTL 1: WO 2015/079703 A1

SUMMARY

(Technical Problem)

However, although the rubber composition as described in PTL 1 imparts reinforcing properties to silica by using a silane coupling agent in combination, compared to conventional rubber compositions for tires containing carbon black, for example, the wear resistance performance may not be sufficient in some cases.

Therefore, the present disclosure addresses the above conventional problems and aims to provide a rubber composition for tires capable of achieving an excellent balance among high fuel efficiency, wet braking performance, and wear resistance performance in the applied product, as well as tread rubber using such a rubber composition for tires.

In addition, the present disclosure further aims to provide a tire comprising such tread rubber having an excellent balance among high fuel efficiency, wet braking performance, and wear resistance performance.

(Solution to Problem)

The gist configuration of the rubber composition for tires, tread rubber, and tire of the present disclosure for solving the above problems is as follows.

[1] A rubber composition for tires comprising a rubber component and a filler,

wherein the rubber component comprises at least an isoprene skeleton rubber and a styrene-butadiene rubber, the filler comprises at least silica, and
the following formula (X) and the following formula (Y) are satisfied:

$$10 \leq A^{0.5}+B^{1.5} \leq 100 \quad \ldots (X)$$

(where A is a content (parts by mass) of the isoprene skeleton rubber in 100 parts by mass of the rubber component, and B is a bound styrene content (mass%) of the styrene-butadiene rubber), and

$$0.55 \leq C/D \leq 0.75 \quad \ldots (Y)$$

(where C is a content (parts by mass) of the silica relative to 100 parts by mass of the rubber component, and D is a content (parts by mass) of the filler relative to 100 parts by mass of the rubber component).

[2] The rubber composition for tires according to [1], further comprising a resin component.

[3] The rubber composition for tires according to [1] or [2], wherein the styrene-butadiene rubber is modified with a modifier containing nitrogen and silicon.
[4] The rubber composition for tires according to any one of [1] to [3], wherein the styrene-butadiene rubber is modified with a modifier having a functional group containing nitrogen and an alkoxy group.
[5] The rubber composition for tires according to any one of [1] to [4], wherein a content of the isoprene skeleton rubber in 100 parts by mass of the rubber component is more than 0 parts by mass and less than 70 parts by mass.
[6] The rubber composition for tires according to any one of [1] to [5], wherein the following formula (Z) is satisfied:

$$10 \leq A^{0.5}+B^{1.5} \leq 85 \qquad \ldots (Z)$$

(where A is the content (parts by mass) of the isoprene skeleton rubber in 100 parts by mass of the rubber component, and B is the bound styrene content (mass%) of the styrene-butadiene rubber).
[7] The rubber composition for tires according to any one of [1] to [6], wherein the rubber component does not contain butadiene rubber.
[8] The rubber composition for tires according to any one of [1] to [7], wherein an amount of sulfur in the rubber composition is 2.5 parts by mass or less relative to 100 parts by mass of the rubber component.
[9] The rubber composition for tires according to any one of [1] to [8], wherein the styrene-butadiene rubber has a bound styrene content of less than 15 mass%.
[10] Tread rubber comprising the rubber composition according to any one of [1] to [9].
[11] A tire comprising the tread rubber according to [10].

(Advantageous Effect)

According to the present disclosure, it is possible to provide a rubber composition for tires capable of achieving an excellent balance among high fuel efficiency, wet braking performance, and wear resistance performance in the applied product, as well as a tread rubber using such a rubber composition for tires.
In addition, according to the present disclosure, it is possible to provide a tire comprising such a tread rubber having an excellent balance among high fuel efficiency, wet braking performance, and wear resistance performance.

DETAILED DESCRIPTION

Hereinafter, the rubber composition for tires, tread rubber, and tire of the present disclosure will be described in detail based on embodiments thereof.
The compounds disclosed herein may be partially or completely derived from fossil resources, biological resources such as plant resources, recyclable resources such as end-of-life tires. They may also be derived from a mixture of two or more of fossil resources, biological resources, and recyclable resources.

(Rubber Composition for Tires)

The rubber composition for tires of the present disclosure is a rubber composition comprising a rubber component and a filler. The rubber component comprises at least an isoprene skeleton rubber and a styrene-butadiene rubber, and the filler comprises at least silica.
Furthermore, the rubber composition for tires of the present disclosure satisfies the following formula (X) and the following formula (Y):

$$10 \leq A^{0.5} + B^{1.5} \leq 100 \qquad \ldots (X)$$

(wherein A is a content (parts by mass) of the isoprene skeleton rubber in 100 parts by mass of the rubber component, and B is a bound styrene content (mass%) of the styrene-butadiene rubber),

$$0.55 \leq C/D \leq 0.75 \qquad \ldots (Y)$$

(wherein C is a content (parts by mass) of the silica relative to 100 parts by mass of the rubber component, and D is a content (parts by mass) of the filler relative to 100 parts by mass of the rubber component).
In the rubber composition for tires of the present disclosure, by including an isoprene skeleton rubber in the rubber component, the fracture strength of the rubber composition can be increased, and as a result, the high fuel efficiency of products to which the rubber composition is applied can be improved. In addition, in the rubber composition for

tires of the present disclosure, by including a styrene-butadiene rubber in the rubber component, the wear resistance performance of products to which the rubber composition for tires is applied can be improved.

Furthermore, the rubber composition for tires of the present disclosure, by satisfying the above formula (X), can achieve both high fuel efficiency and wet braking performance in products to which the rubber composition for tires is applied. Moreover, by satisfying the above formula (Y), the rubber composition for tires of the present disclosure can ensure wear resistance performance.

Accordingly, the rubber composition for tires of the present disclosure, by satisfying both the above formula (X) and formula (Y), can provide an excellent balance among high fuel efficiency, wet braking performance, and wear resistance performance in products to which the rubber composition for tires is applied.

(Rubber Component)

The rubber composition for tires of the present disclosure comprises a rubber component. The rubber component comprises at least an isoprene skeleton rubber and a styrene-butadiene rubber. The rubber composition for tires of the present disclosure may further comprise other rubber components.

- Isoprene Skeleton Rubber -

The isoprene skeleton rubber refers to a rubber having isoprene units as the main skeleton. Examples of the isoprene skeleton rubber include, for example, natural rubber (NR) and synthetic isoprene rubber (IR).

By including an isoprene skeleton rubber in the rubber component, the fracture strength of the rubber composition for tires can be increased. As a result, the rolling resistance of products to which the rubber composition for tires is applied can be reduced, thereby improving high fuel efficiency, and also improving the wear resistance performance of the product.

The content of the isoprene skeleton rubber is preferably more than 0 parts by mass and less than 70 parts by mass per 100 parts by mass of the rubber component, and more preferably 1 to 40 parts by mass. When the content of the isoprene skeleton rubber is within the above range, the wet braking performance and high fuel efficiency of products to which the rubber composition for tires is applied can be improved.

- Styrene-Butadiene Rubber (SBR) -

The rubber component comprises a styrene-butadiene rubber (SBR).

The content of the styrene-butadiene rubber (SBR) is preferably 20 to 99 parts by mass per 100 parts by mass of the rubber component, more preferably 30 to 99 parts by mass, even more preferably 40 to 99 parts by mass, still more preferably 50 to 99 parts by mass, and most preferably 60 to 99 parts by mass. When the content of the styrene-butadiene rubber is within the above range, the high fuel efficiency and wet braking performance of products to which the rubber composition for tires is applied can be improved.

The styrene-butadiene rubber contained in the rubber composition for tires of the present disclosure may be a single type or may be two or more different types of styrene-butadiene rubbers. As the two or more different types of styrene-butadiene rubbers, for example, two or more styrene-butadiene rubbers having different bound styrene contents may be used.

The styrene-butadiene rubber preferably has a bound styrene content of less than 15 mass%, more preferably 14 mass% or less, even more preferably 13 mass% or less, and still more preferably 12 mass% or less. When the bound styrene content of the styrene-butadiene rubber is less than 15 mass%, the glass transition temperature tends to be lower. Further, the bound styrene content of the styrene-butadiene rubber is preferably 5 mass% or more, more preferably 7 mass% or more, and still more preferably 8 mass% or more. When the bound styrene content of the styrene-butadiene rubber is 5 mass% or more, the wear resistance performance of products to which the rubber composition for tires is applied can be improved. Note that the bound styrene content of the styrene-butadiene rubber refers to the proportion of styrene units contained in the styrene-butadiene rubber.

The bound styrene content of the styrene-butadiene rubber can be adjusted by the amount of monomer used for the polymerization of the styrene-butadiene rubber and the degree of polymerization, etc. The bound styrene content is measured using a spectrophotometer "UV-2450" manufactured by Shimadzu Corporation, by measuring the absorption at the ultraviolet absorption wavelength (around 254 nm) due to the phenyl group of styrene, and determining the bound styrene content (mass%) relative to 100 mass% of the sample.

The styrene-butadiene rubber may be modified with a modifier. When two or more types of styrene-butadiene rubbers are used, only one of the styrene-butadiene rubbers may be modified, or all of the styrene-butadiene rubbers may be modified. Further, when two or more styrene-butadiene rubbers are modified, each styrene-butadiene rubber may be modified with a different modifier.

-- Modified Styrene-Butadiene Rubber --

The styrene-butadiene rubber is preferably modified with a modifier containing nitrogen and silicon. When the styrene-butadiene rubber is modified with a modifier containing nitrogen and silicon, the balance among high fuel efficiency, wet braking performance, and wear resistance performance of products to which the rubber composition for tires is applied can be further improved, and in particular, high fuel efficiency and wear resistance performance can be further improved.

Here, the modifier containing nitrogen and silicon is a generic term for modifiers containing at least one nitrogen and at least one silicon.

The styrene-butadiene rubber is more preferably modified with a hydrocarbyloxysilane compound containing nitrogen and silicon. When modified with a hydrocarbyloxysilane compound containing nitrogen and silicon, so-called both-end modified styrene-butadiene rubber can be obtained, and the dispersibility and reinforcing property of fillers such as carbon black and silica can be further enhanced.

Specific examples of the hydrocarbyloxysilane compound containing nitrogen and silicon used as the modifier include N,N-bis(trimethylsilyl)aminopropylmethyldimethoxysilane, N,N-bis(trimethylsilyl)aminopropylmethyldiethoxysilane, N,N-bis(trimethylsilyl)aminoethylmethyldimethoxysilane, N,N-bis(trimethylsilyl)aminoethylmethyldiethoxysilane, 1-trimethylsilyl-2,2-diethoxymethyl-1-aza-2-silacyclopentane, N-(1,3-dimethylbutylidene)-3-(triethoxysilyl)-1-propanamine, N-{3-(triethoxysilyl)propyl}-4,5-dihydroimidazole, N,N-bis(trimethylsilyl)aminopropyltriethoxysilane, and dimethylaminopropyltriethoxysilane, with N,N-bis(trimethylsilyl)aminopropylmethyldimethoxysilane being particularly preferred.

These modifiers may be used alone or in combination of two or more.

The styrene-butadiene rubber is also preferably modified with a modifier having a functional group containing nitrogen and an alkoxy group. When the styrene-butadiene rubber is modified with a modifier having a functional group containing a nitrogen atom and an alkoxy group, the balance among high fuel efficiency, wet braking performance, and wear resistance performance of products to which the rubber composition for tires is applied can be further improved, and in particular, high fuel efficiency and wear resistance performance can be further improved.

Here, the modifier having a functional group containing nitrogen and an alkoxy group is a generic term for modifiers having a functional group containing at least one nitrogen atom and at least one alkoxy group.

The functional group containing a nitrogen atom is preferably selected from the following:
primary amino group, primary amino group protected with a hydrolyzable protecting group, onium salt residual group of primary amine, isocyanate group, thioisocyanate group, imine group, imine residual group, amide group, secondary amino group protected with a hydrolyzable protecting group, cyclic secondary amino group, onium salt residual group of cyclic secondary amine, non-cyclic secondary amino group, onium salt residual group of non-cyclic secondary amine, isocyanuric acid triester residual group, cyclic tertiary amino group, non-cyclic tertiary amino group, nitrile group, pyridine residual group, onium salt residual group of cyclic tertiary amine, and onium salt residual group of non-cyclic tertiary amine, and may be a monovalent hydrocarbon group having 1 to 30 carbon atoms including a straight chain, branched chain, alicyclic or aromatic ring, or a monovalent hydrocarbon group having 1 to 30 carbon atoms including a straight chain, branched chain, alicyclic or aromatic ring, which may further contain at least one hetero atom selected from oxygen atom, sulfur atom, and phosphorus atom.

--- Modified Styrene-Butadiene Rubber of First Preferred Embodiment ---

The styrene-butadiene rubber (SBR) is preferably modified with an aminoalkoxysilane compound, and from the viewpoint of high affinity with the filler, it is more preferably modified at the terminal with an aminoalkoxysilane compound. When the terminal of the styrene-butadiene rubber is modified with an aminoalkoxysilane compound, the interaction between the modified styrene-butadiene rubber and the filler (particularly silica) becomes especially strong.

The modification site of the styrene-butadiene rubber may be the molecular terminal as described above, or may be the main chain.

The styrene-butadiene rubber whose molecular terminal is modified can be produced, for example, by reacting various modifiers with the terminal of a styrene-butadiene copolymer having an active terminal, according to the methods described in WO 2003/046020 A1 and JP 2007-217562 A.

In a preferred embodiment, the styrene-butadiene rubber whose molecular terminal is modified can be produced by reacting an aminoalkoxysilane compound with the terminal of a styrene-butadiene copolymer having an active terminal and a cis-1,4 bond content of 75% or more, and then stabilizing by reacting with a carboxylic acid partial ester of a polyhydric alcohol, according to the methods described in WO 2003/046020 A1 and JP 2007-217562 A.

The carboxylic acid partial ester of a polyhydric alcohol refers to an ester of a polyhydric alcohol and a carboxylic acid, and means a partial ester having one or more hydroxyl groups. Specifically, esters of sugars or modified sugars having 4 or more carbon atoms and fatty acids are preferably used. More preferably, (1) a fatty acid partial ester of a polyhydric alcohol, particularly a partial ester (monoester, diester, or triester) of a saturated or unsaturated higher fatty acid

having 10 to 20 carbon atoms and a polyhydric alcohol, and (2) a partial ester of a polycarboxylic acid and a higher alcohol, in which 1 to 3 are bonded to a polyhydric alcohol, and the like can be mentioned.

As the polyhydric alcohol used as a raw material for the partial ester, preferably, a sugar having 5 or 6 carbon atoms and at least three hydroxyl groups (which may or may not be hydrogenated), glycol, or polyhydroxy compound is used. As the raw material fatty acid, preferably, a saturated or unsaturated fatty acid having 10 to 20 carbon atoms is used, for example, stearic acid, lauric acid, and palmitic acid.

Among the fatty acid partial esters of polyhydric alcohols, sorbitan fatty acid esters are preferred, and specifically, sorbitan monolaurate, sorbitan monopalmitate, sorbitan monostearate, sorbitan tristearate, sorbitan monooleate, and sorbitan trioleate can be mentioned.

The aminoalkoxysilane compound is not particularly limited, but an aminoalkoxysilane compound represented by the following general formula (i) is preferred.

$$R^{11}_a\text{-Si-}(OR^{12})_{4-a} \cdots \qquad (i)$$

In the general formula (i), $R^{11}$ and $R^{12}$ each independently represent a monovalent aliphatic hydrocarbon group having 1 to 20 carbon atoms or a monovalent aromatic hydrocarbon group having 6 to 18 carbon atoms, at least one of $R^{11}$ and $R^{12}$ is substituted with an amino group, a is an integer of 0 to 2, and when there are a plurality of $OR^{12}$, each $OR^{12}$ may be the same or different, and the molecule does not contain an active proton.

As the aminoalkoxysilane compound, an aminoalkoxysilane compound represented by the following general formula (ii) is also preferred.

[Chem. 1]

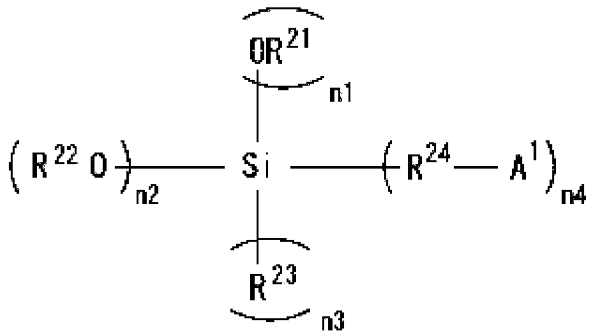

· · · · (ii)

In the general formula (ii), n1 + n2 + n3 + n4 = 4 (where n2 is an integer of 1 to 4, and n1, n3, and n4 are integers of 0 to 3).

$A^1$ is at least one functional group selected from the group consisting of a saturated cyclic tertiary amine compound residual group, an unsaturated cyclic tertiary amine compound residual group, a ketimine residual group, a nitrile group, a (thio)isocyanate group, an isocyanuric acid trihydrocarbyl ester group, a nitrile group, a pyridine group, a (thio)ketone group, an amide group, and a primary or secondary amino group having a hydrolyzable group. When n4 is 2 or more, $A^1$ may be the same or different, and $A^1$ may be a divalent group that forms a cyclic structure with Si.

$R^{21}$ is a monovalent aliphatic or alicyclic hydrocarbon group having 1 to 20 carbon atoms or a monovalent aromatic hydrocarbon group having 6 to 18 carbon atoms, and when n1 is 2 or more, they may be the same or different.

$R^{22}$ is a monovalent aliphatic or alicyclic hydrocarbon group having 1 to 20 carbon atoms or a monovalent aromatic hydrocarbon group having 6 to 18 carbon atoms, and may contain a nitrogen atom and/or a silicon atom. When n2 is 2 or more, $R^{22}$ may be the same or different, or may together form a ring.

$R^{23}$ is a monovalent aliphatic or alicyclic hydrocarbon group having 1 to 20 carbon atoms, a monovalent aromatic hydrocarbon group having 6 to 18 carbon atoms, or a halogen atom, and when n3 is 2 or more, they may be the same or different.

$R^{24}$ is a divalent aliphatic or alicyclic hydrocarbon group having 1 to 20 carbon atoms or a divalent aromatic hydrocarbon group having 6 to 18 carbon atoms, and when n4 is 2 or more, they may be the same or different.

As the hydrolyzable group in the primary or secondary amino group having a hydrolyzable group, a trimethylsilyl group or a tert-butyldimethylsilyl group is preferred, and a trimethylsilyl group is particularly preferred.

The aminoalkoxysilane compound represented by the above general formula (ii) is preferably an aminoalkoxysilane compound represented by the following general formula (iii).

[Chem. 2]

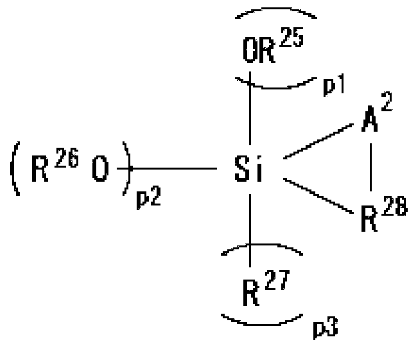

· · · · ( iii )

In the general formula (iii), p1 + p2 + p3 = 2 (where p2 is an integer of 1 to 2, and p1 and p3 are integers of 0 to 1).
$A^2$ is $NR^a$ (where $R^a$ is a monovalent hydrocarbon group, a hydrolyzable group, or a nitrogen-containing organic group).
$R^{25}$ is a monovalent aliphatic or alicyclic hydrocarbon group having 1 to 20 carbon atoms or a monovalent aromatic hydrocarbon group having 6 to 18 carbon atoms.
$R^{26}$ is a monovalent aliphatic or alicyclic hydrocarbon group having 1 to 20 carbon atoms, a monovalent aromatic hydrocarbon group having 6 to 18 carbon atoms, or a nitrogen-containing organic group, and may contain a nitrogen atom and/or a silicon atom. When p2 is 2, $R^{26}$ may be the same or different, or may together form a ring.
$R^{27}$ is a monovalent aliphatic or alicyclic hydrocarbon group having 1 to 20 carbon atoms, a monovalent aromatic hydrocarbon group having 6 to 18 carbon atoms, or a halogen atom.
$R^{28}$ is a divalent aliphatic or alicyclic hydrocarbon group having 1 to 20 carbon atoms or a divalent aromatic hydrocarbon group having 6 to 18 carbon atoms.
As the hydrolyzable group, a trimethylsilyl group or a tert-butyldimethylsilyl group is preferred, and a trimethylsilyl group is particularly preferred.
The aminoalkoxysilane compound represented by the above general formula (ii) is also preferably an aminoalkoxysilane compound represented by the following general formula (iv) or the following general formula (v).

[Chem. 3]

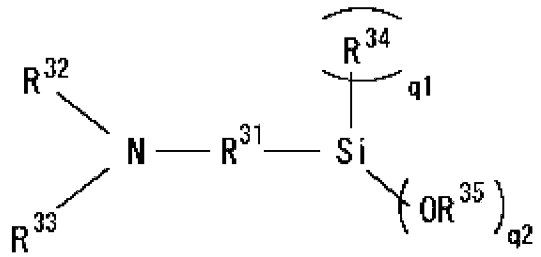

· · · · (iv)

In general formula (iv), q1 + q2 = 3 (where q1 is an integer from 0 to 2, and q2 is an integer from 1 to 3).
$R^{31}$ is a divalent aliphatic or alicyclic hydrocarbon group having 1 to 20 carbon atoms, or a divalent aromatic hydrocarbon group having 6 to 18 carbon atoms.
$R^{32}$ and $R^{33}$ are each independently a hydrolyzable group, a monovalent aliphatic or alicyclic hydrocarbon group having 1 to 20 carbon atoms, or a monovalent aromatic hydrocarbon group having 6 to 18 carbon atoms.
$R^{34}$ is a monovalent aliphatic or alicyclic hydrocarbon group having 1 to 20 carbon atoms, or a monovalent aromatic hydrocarbon group having 6 to 18 carbon atoms, and when q1 is 2, the $R^{34}$ groups may be the same or different.
$R^{35}$ is a monovalent aliphatic or alicyclic hydrocarbon group having 1 to 20 carbon atoms, or a monovalent aromatic hydrocarbon group having 6 to 18 carbon atoms, and when q2 is 2 or more, the $R^{35}$ groups may be the same or different.

[Chem. 4]

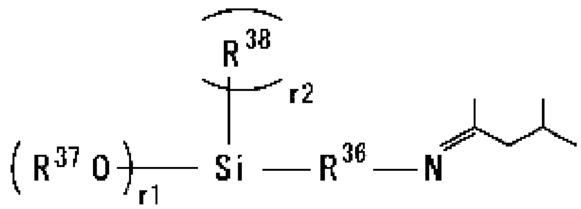

· · · · (v)

In general formula (v), r1 + r2 = 3 (where r1 is an integer from 1 to 3, and r2 is an integer from 0 to 2).

$R^{36}$ is a divalent aliphatic or alicyclic hydrocarbon group having 1 to 20 carbon atoms, or a divalent aromatic hydrocarbon group having 6 to 18 carbon atoms.

$R^{37}$ is a dimethylaminomethyl group, dimethylaminoethyl group, diethylaminomethyl group, diethylaminoethyl group, methylsilyl(methyl)aminomethyl group, methylsilyl(methyl)aminoethyl group, methylsilyl(ethyl)aminomethyl group, methylsilyl(ethyl)aminoethyl group, dimethylsilylaminomethyl group, dimethylsilylaminoethyl group, a monovalent aliphatic or alicyclic hydrocarbon group having 1 to 20 carbon atoms, or a monovalent aromatic hydrocarbon group having 6 to 18 carbon atoms, and when r1 is 2 or more, the $R^{37}$ groups may be the same or different.

$R^{38}$ is a hydrocarbyloxy group having 1 to 20 carbon atoms, a monovalent aliphatic or alicyclic hydrocarbon group having 1 to 20 carbon atoms, or a monovalent aromatic hydrocarbon group having 6 to 18 carbon atoms, and when r2 is 2, the $R^{38}$ groups may be the same or different.

Specific examples of aminoalkoxysilane compounds represented by general formula (v) include N-(1,3-dimethylbutylidene)-3-triethoxysilyl-1-propanamine.

The aminoalkoxysilane compound represented by the above general formula (ii) is also preferably an aminoalkoxysilane compound represented by the following general formula (vi) or the following general formula (vii).

[Chem. 5]

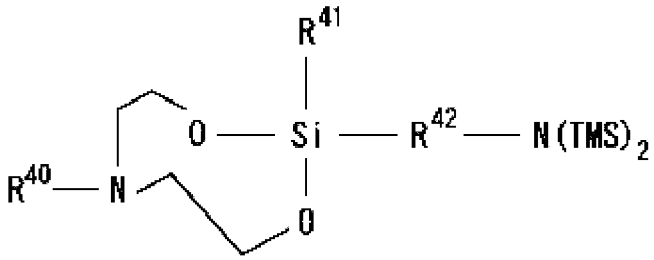

· · · · (vi)

In general formula (vi), $R^{40}$ is a trimethylsilyl group, a monovalent aliphatic or alicyclic hydrocarbon group having 1 to 20 carbon atoms, or a monovalent aromatic hydrocarbon group having 6 to 18 carbon atoms.

$R^{41}$ is a hydrocarbyloxy group having 1 to 20 carbon atoms, a monovalent aliphatic or alicyclic hydrocarbon group having 1 to 20 carbon atoms, or a monovalent aromatic hydrocarbon group having 6 to 18 carbon atoms.

$R^{42}$ is a divalent aliphatic or alicyclic hydrocarbon group having 1 to 20 carbon atoms, or a divalent aromatic hydrocarbon group having 6 to 18 carbon atoms.

Here, TMS indicates a trimethylsilyl group (the same applies hereinafter).

[Chem. 6]

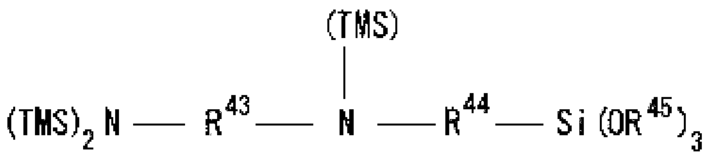

· · · · (vii)

In general formula (vii), $R^{43}$ and $R^{44}$ are each independently a divalent aliphatic or alicyclic hydrocarbon group having 1 to 20 carbon atoms, or a divalent aromatic hydrocarbon group having 6 to 18 carbon atoms.

$R^{45}$ is a monovalent aliphatic or alicyclic hydrocarbon group having 1 to 20 carbon atoms, or a monovalent aromatic hydrocarbon group having 6 to 18 carbon atoms, and each $R^{45}$ may be the same or different.

The aminoalkoxysilane compound represented by the above general formula (ii) is also preferably an aminoalkoxysilane compound represented by the following general formula (viii) or the following general formula (ix).

[Chem. 7]

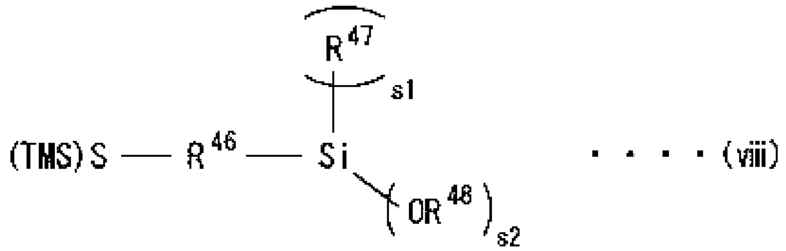

In general formula (viii), s1 + s2 is 3 (where s1 is an integer from 0 to 2, and s2 is an integer from 1 to 3).

$R^{46}$ is a divalent aliphatic or alicyclic hydrocarbon group having 1 to 20 carbon atoms, or a divalent aromatic hydrocarbon group having 6 to 18 carbon atoms.

$R^{47}$ and $R^{48}$ are each independently a monovalent aliphatic or alicyclic hydrocarbon group having 1 to 20 carbon atoms, or a monovalent aromatic hydrocarbon group having 6 to 18 carbon atoms. A plurality of $R^{47}$ or $R^{48}$ groups may be the same or different.

[Chem. 8]

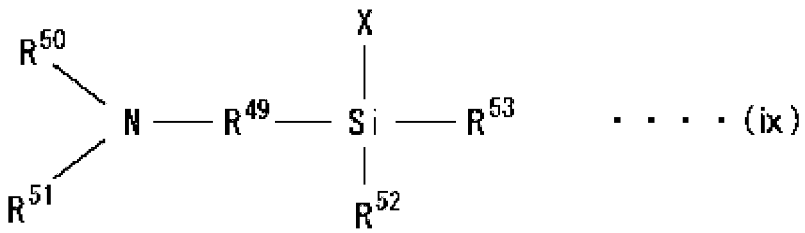

In general formula (ix), X is a halogen atom.

$R^{49}$ is a divalent aliphatic or alicyclic hydrocarbon group having 1 to 20 carbon atoms, or a divalent aromatic hydrocarbon group having 6 to 18 carbon atoms.

$R^{50}$ and $R^{51}$ are each independently a hydrolyzable group, a monovalent aliphatic or alicyclic hydrocarbon group having 1 to 20 carbon atoms, or a monovalent aromatic hydrocarbon group having 6 to 18 carbon atoms, or $R^{50}$ and $R^{51}$ may be bonded together to form a divalent organic group.

$R^{52}$ and $R^{53}$ are each independently a halogen atom, a hydrocarbyloxy group, a monovalent aliphatic or alicyclic hydrocarbon group having 1 to 20 carbon atoms, or a monovalent aromatic hydrocarbon group having 6 to 18 carbon atoms.

As $R^{50}$ and $R^{51}$, hydrolyzable groups are preferred, and as the hydrolyzable group, a trimethylsilyl group or a tert-butyldimethylsilyl group is preferred, with a trimethylsilyl group being particularly preferred.

The aminoalkoxysilane compound represented by the above general formula (ii) is also preferably an aminoalkoxysilane compound represented by the following general formula (x), the following general formula (xi), the following general formula (xii), or the following general formula (xiii).

[Chem. 9]

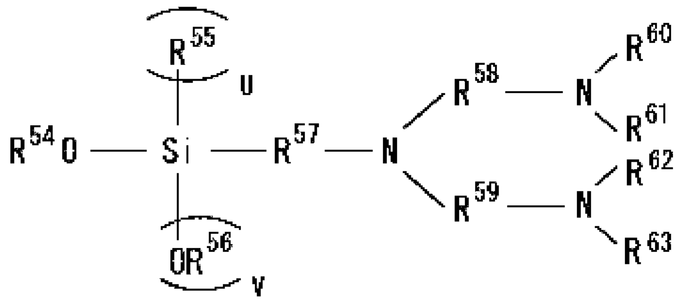

· · · · (x)

[Chem. 10]

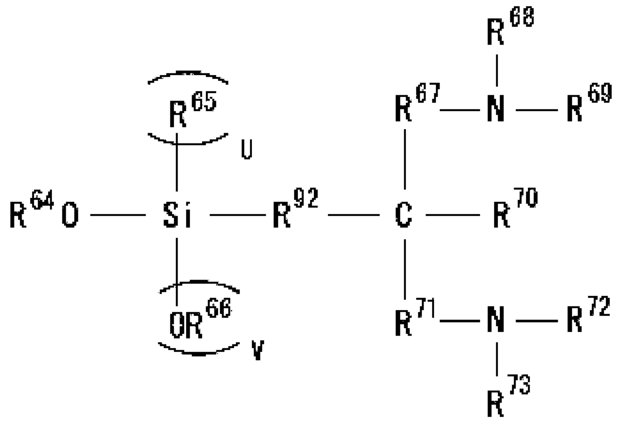

· · · · (xi)

[Chem. 11]

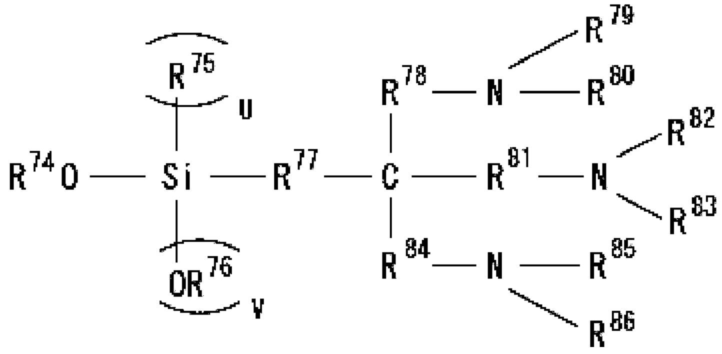

· · · · (xii)

[Chem. 12]

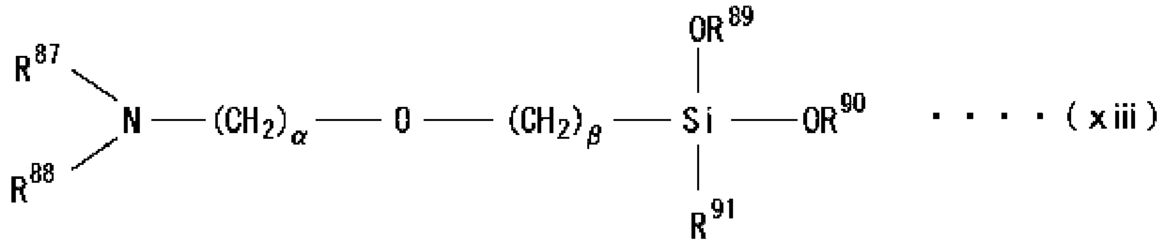

In general formulas (x) to (xii), the symbols U and V are each integers satisfying 0 to 2 and U + V = 2.

In general formulas (x) to (xiii), $R^{14}$ to $R^{92}$ may be the same or different, and are a monovalent or divalent aliphatic or alicyclic hydrocarbon group having 1 to 20 carbon atoms, or a monovalent or divalent aromatic hydrocarbon group having 6 to 18 carbon atoms.

In general formula (xiii), $\alpha$ and $\beta$ are integers from 0 to 5.

Among the compounds satisfying general formulas (x), (xi), and (xii), particularly preferred are N1,N1,N7,N7-tetramethyl-4-((trimethoxysilyl)methyl)heptane-1,7-diamine; 2-((hexyl-dimethoxysilyl)methyl)-N1,N1,N3,N3-2-pentamethylpropane-1,3-diamine; N1-(3-(dimethylamino)propyl)-N3,N3-dimethyl-N1-(3-(trimethoxysilyl)propyl)propane-1,3-diamine; and 4-(3-(dimethylamino)propyl)-N1,N1,N7,N7-tetramethyl-4-((trimethoxysilyl)methyl)heptane-1,7-diamine.

Also, among the compounds satisfying general formula (xiii), particularly preferred are N,N-dimethyl-2-(3-(dimethoxymethylsilyl)propoxy)ethanamine; N,N-bis(trimethylsilyl)-2-(3-(trimethoxysilyl)propoxy)ethanamine; N,N-dimethyl-2-(3-(trimethoxysilyl)propoxy)ethanamine; and N,N-dimethyl-3-(3-(trimethoxysilyl)propoxy)propan-1-amine.

--- Modified Styrene-Butadiene Rubber of the Second Preferred Embodiment ---

The above styrene-butadiene rubber (SBR) is also preferably modified with a coupling agent represented by the following general formula (I). In this case, it is possible to further improve the high fuel efficiency and wear resistance performance of a product to which the rubber composition for tires is applied.

[Chem. 13]

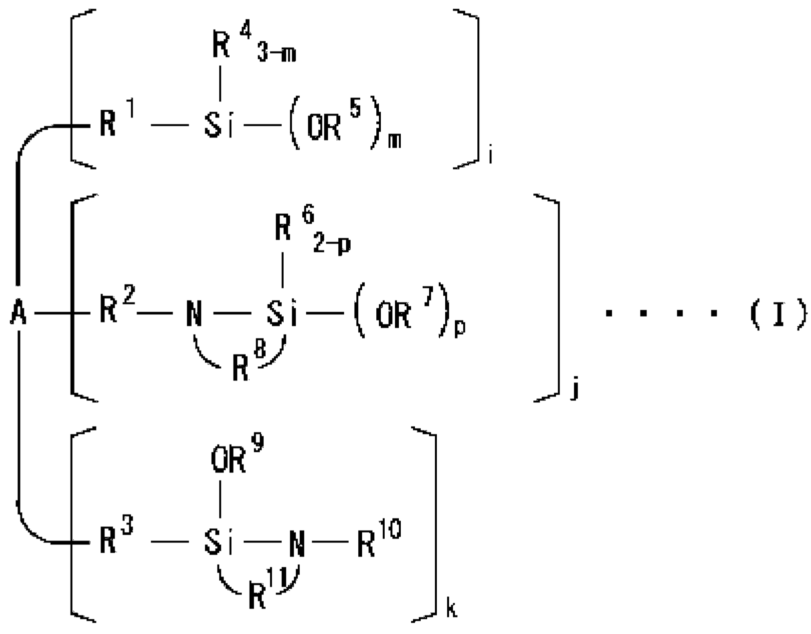

In the above general formula (I), $R^1$, $R^2$, and $R^3$ each independently represent a single bond or an alkylene group having 1 to 20 carbon atoms.

$R^4$, $R^5$, $R^6$, $R^7$, and $R^9$ each independently represent an alkyl group having 1 to 20 carbon atoms.

$R^8$ and $R^{11}$ each independently represent an alkylene group having 1 to 20 carbon atoms.

$R^{10}$ represents an alkyl group or a trialkylsilyl group having 1 to 20 carbon atoms.

m is an integer from 1 to 3, and p is 1 or 2.

When there are a plurality of $R^1$ to $R^{11}$, m, and p, they are each independent.

i, j, and k are each independently integers from 0 to 6. However, (i + j + k) is an integer from 3 to 10.

A represents a hydrocarbon group having 1 to 20 carbon atoms, or an organic group having at least one atom selected from the group consisting of oxygen atom, nitrogen atom, silicon atom, sulfur atom, and phosphorus atom, and having no active hydrogen.

Here, the hydrocarbon group indicated by A in general formula (I) includes saturated, unsaturated, aliphatic, and aromatic hydrocarbon groups. Examples of organic groups having no active hydrogen include organic groups not having a functional group with active hydrogen, such as a hydroxyl group (-OH), secondary amino group (>NH), primary amino group ($-NH_2$), or sulfhydryl group (-SH).

The styrene-butadiene rubber modified with a coupling agent represented by the above general formula (I) preferably has a weight-average molecular weight (Mw) of $20 \times 10^4$ to $300 \times 10^4$, contains 0.25 to 30 mass% of modified styrene-butadiene rubber having a molecular weight of $200 \times 10^4$ to $500 \times 10^4$ relative to the total amount of the modified styrene-butadiene rubber, and has a contracting factor (g') of less than 0.64.

In general, a polymer having branches tends to have a smaller molecular size compared to a linear polymer with the same absolute molecular weight, and the above contracting factor (g') is an index of the ratio of the size occupied by the molecule relative to a linear polymer with the same assumed absolute molecular weight. That is, as the degree of branching of the polymer increases, the contracting factor (g') tends to decrease. In the present embodiment, intrinsic viscosity is used as an index of molecular size, and a linear polymer is used as one that follows the relationship of intrinsic viscosity $[\eta] = -3.883M^{0.771}$. The contracting factor (g') at each absolute molecular weight of the modified styrene-butadiene rubber is calculated, and the average value of the contracting factor (g') when the absolute molecular weight is $100 \times 10^4$ to $200 \times 10^4$ is taken as the contracting factor (g') of the modified styrene-butadiene rubber. Here, "branching" refers to a structure formed by direct or indirect bonding of another polymer to one polymer. The "degree of branching" is the number of polymers directly or indirectly bonded to one branch. For example, in the case where five styrene-butadiene copolymer chains, described later, are indirectly bonded to each other via a coupling residual group described later, the degree of branching is 5. The coupling residual group is a constituent unit of the modified styrene-butadiene rubber that is bonded to the styrene-butadiene copolymer chain, and is, for example, a structural unit derived from the coupling agent generated by reacting the styrene-butadiene copolymer and the coupling agent described later. The styrene-butadiene copolymer chain is a constituent unit of the modified styrene-butadiene rubber, and is, for example, a structural unit derived from the styrene-butadiene copolymer generated by reacting the styrene-butadiene copolymer and the coupling agent described later.

The contracting factor (g') is preferably less than 0.64, more preferably 0.63 or less, even more preferably 0.60 or less, still more preferably 0.59 or less, and particularly preferably 0.57 or less. The lower limit of the contracting factor (g') is not particularly limited and may be below the detection limit, but is preferably 0.30 or more, more preferably 0.33 or more, still more preferably 0.35 or more, and particularly preferably 0.45 or more. By using a modified styrene-butadiene rubber having a contracting factor (g') within this range, the processability of the rubber composition is improved.

Since the contracting factor (g') tends to depend on the degree of branching, for example, the contracting factor (g') can be controlled using the degree of branching as an index. Specifically, when the modified styrene-butadiene rubber has a degree of branching of 6, the contracting factor (g') tends to be 0.59 or more and 0.63 or less, and when the degree of branching is 8, the contracting factor (g') tends to be 0.45 or more and 0.59 or less.

The styrene-butadiene rubber modified with a coupling agent represented by the above general formula (I) preferably has branches and a degree of branching of 5 or more. Further, the modified styrene-butadiene rubber preferably has one or more coupling residual groups and styrene-butadiene copolymer chains bonded to the coupling residual group, and more preferably, the above branching includes a branch in which 5 or more of the styrene-butadiene copolymer chains are bonded to one such coupling residual group. By specifying the structure of the modified styrene-butadiene rubber so that the degree of branching is 5 or more and the branching includes a branch in which 5 or more styrene-butadiene copolymer chains are bonded to one coupling residual group, the contracting factor (g') can be more reliably set to less than 0.64. The number of styrene-butadiene copolymer chains bonded to one coupling residual group can be confirmed from the value of the contracting factor (g').

Further, the modified styrene-butadiene rubber more preferably has branches and a degree of branching of 6 or more. The modified styrene-butadiene rubber preferably has one or more coupling residual groups and styrene-butadiene copolymer chains bonded to the coupling residual group, and more preferably, the above branching includes a branch in which 6 or more of the styrene-butadiene copolymer chains are bonded to one such coupling residual group. By specifying the structure of the modified styrene-butadiene rubber so that the degree of branching is 6 or more and the branching includes a branch in which 6 or more styrene-butadiene copolymer chains are bonded to one coupling residual group, the

contracting factor (g') can be set to 0.63 or less.

Furthermore, the modified styrene-butadiene rubber even more preferably has branches and a degree of branching of 7 or more, and still more preferably a degree of branching of 8 or more. The upper limit of the degree of branching is not particularly limited, but is preferably 18 or less. The modified styrene-butadiene rubber preferably has one or more coupling residual groups and styrene-butadiene copolymer chains bonded to the coupling residual group, and even more preferably, the above branching includes a branch in which 7 or more of the styrene-butadiene copolymer chains are bonded to one such coupling residual group, and particularly preferably includes a branch in which 8 or more of the styrene-butadiene copolymer chains are bonded to one such coupling residual group. By specifying the structure of the modified styrene-butadiene rubber so that the degree of branching is 8 or more and the branching includes a branch in which 8 or more styrene-butadiene copolymer chains are bonded to one coupling residual group, the contracting factor (g') can be set to 0.59 or less.

It is preferable that at least one end of the above styrene-butadiene copolymer chains is bonded to a silicon atom possessed by the coupling residual group. In this case, the ends of a plurality of styrene-butadiene copolymer chains may be bonded to one silicon atom. Further, the end of the styrene-butadiene copolymer chain and an alkoxy group having 1 to 20 carbon atoms or a hydroxyl group may be bonded to one silicon atom, and as a result, the one silicon atom may constitute an alkoxysilyl group or a silanol group having 1 to 20 carbon atoms.

The above modified styrene-butadiene rubber may be an oil-extended rubber to which an extender oil is added. The modified styrene-butadiene rubber may be non-oil-extended or oil-extended, but from the viewpoint of wear resistance performance, it is preferable that the Mooney viscosity measured at 100°C is 20 or more and 100 or less, and more preferably 30 or more and 80 or less.

The weight-average molecular weight (Mw) of the above modified styrene-butadiene rubber is preferably $20 \times 10^4$ or more and $300 \times 10^4$ or less, more preferably $50 \times 10^4$ or more, even more preferably $64 \times 10^4$ or more, and particularly preferably $80 \times 10^4$ or more. The weight-average molecular weight is preferably $250 \times 10^4$ or less, more preferably $180 \times 10^4$ or less, even more preferably $150 \times 10^4$ or less. When the weight-average molecular weight is $20 \times 10^4$ or more, it is possible to sufficiently improve both the low loss property and wear resistance performance of a product to which the rubber composition for tires is applied. When the weight-average molecular weight is $300 \times 10^4$ or less, the processability of the rubber composition is improved.

The modified styrene-butadiene rubber preferably contains, relative to the total amount (100 mass%) of the modified styrene-butadiene rubber, 0.25 mass% or more and 30 mass% or less of a modified styrene-butadiene rubber having a molecular weight of $200\times10^4$ or more and $500\times10^4$ or less (hereinafter also referred to as the "specific high molecular weight component"). When the content of the specific high molecular weight component is 0.25 mass% or more and 30 mass% or less, it is possible to sufficiently improve both the low loss property and the wear resistance performance of a product to which the rubber composition for tires is applied. The modified styrene-butadiene rubber preferably contains the specific high molecular weight component in an amount of 1.0 mass% or more, more preferably 1.4 mass% or more, even more preferably 1.75 mass% or more, still more preferably 2.0 mass% or more, particularly preferably 2.15 mass% or more, and most preferably 2.5 mass% or more. Further, the modified styrene-butadiene rubber preferably contains the specific high molecular weight component in an amount of 28 mass% or less, more preferably 25 mass% or less, even more preferably 20 mass% or less, and particularly preferably 18 mass% or less.

Note that, in the present specification, the "molecular weight" of the rubber component refers to the standard polystyrene-converted molecular weight obtained by GPC (gel permeation chromatography). In order to obtain a modified styrene-butadiene rubber in which the content of the specific high molecular weight component is within such a range, it is preferable to control the reaction conditions in the polymerization step and the reaction step described later. For example, in the polymerization step, the amount of the organolithium compound used as a polymerization initiator, which will be described later, may be adjusted. In addition, in the polymerization step, regardless of whether the polymerization mode is continuous or batch, it is preferable to use a method having a residence time distribution, that is, to broaden the time distribution of the growth reaction.

In the modified styrene-butadiene rubber, the molecular weight distribution (Mw/Mn), which is the ratio of the weight-average molecular weight (Mw) to the number-average molecular weight (Mn), is preferably 1.6 or more and 3.0 or less. When the molecular weight distribution of the modified styrene-butadiene rubber is within this range, the processability of the rubber composition becomes favorable.

The method for producing the modified styrene-butadiene rubber is not particularly limited, but it is preferable to include a polymerization step in which butadiene and styrene are copolymerized using an organolithium compound as a polymerization initiator to obtain a styrene-butadiene copolymer, and a reaction step in which a reactive compound having a functionality of 5 or more (hereinafter also referred to as a "coupling agent") is reacted with the active terminal of the styrene-butadiene copolymer.

The polymerization step is preferably a polymerization by a growth reaction via living anionic polymerization, whereby a styrene-butadiene copolymer having an active terminal can be obtained, and a modified styrene-butadiene rubber with a high modification rate can be obtained.

The styrene-butadiene copolymer is obtained by copolymerizing 1,3-butadiene and styrene.

The amount of the organolithium compound used as the polymerization initiator is preferably determined according to the molecular weight of the target styrene-butadiene copolymer or modified styrene-butadiene rubber. The amount of monomer such as 1,3-butadiene and styrene relative to the amount of polymerization initiator is related to the degree of polymerization, that is, to the number-average molecular weight and/or the weight-average molecular weight. Therefore, in order to increase the molecular weight, it is preferable to adjust in the direction of reducing the amount of polymerization initiator, and in order to decrease the molecular weight, it is preferable to adjust in the direction of increasing the amount of polymerization initiator.

The organolithium compound is preferably an alkyllithium compound from the viewpoint of industrial availability and ease of control of the polymerization reaction. In this case, a styrene-butadiene copolymer having an alkyl group at the polymerization initiation terminal can be obtained. Examples of the alkyllithium compound include n-butyllithium, sec-butyllithium, tert-butyllithium, n-hexyllithium, benzyllithium, phenyllithium, and styryllithium. Among the alkyllithium compounds, n-butyllithium and sec-butyllithium are preferable from the viewpoint of industrial availability and ease of control of the polymerization reaction. These organolithium compounds may be used alone or in combination of two or more.

In the polymerization step, examples of the polymerization reaction mode include batch mode and continuous mode. In the continuous mode, one or two or more connected reactors can be used. As the continuous reactors, for example, tank type with a stirrer or tubular type can be used. In the continuous mode, it is preferable that monomer, inert solvent, and polymerization initiator are continuously fed into the reactor, a polymer solution containing the polymer is obtained in the reactor, and the polymer solution is continuously discharged. As the batch reactor, for example, a tank type with a stirrer can be used. In the batch mode, it is preferable that monomer, inert solvent, and polymerization initiator are fed, and, if necessary, monomer is continuously or intermittently added during polymerization, a polymer solution containing the polymer is obtained in the reactor, and the polymer solution is discharged after completion of polymerization. In the present embodiment, in order to obtain a styrene-butadiene copolymer having a high proportion of active terminals, the continuous mode is preferable, as it allows the polymer to be continuously discharged and supplied to the next reaction in a short time.

The polymerization step is preferably performed in an inert solvent. Examples of the solvent include hydrocarbon solvents such as saturated hydrocarbons and aromatic hydrocarbons. Specific examples of the hydrocarbon solvent include, but are not limited to, aliphatic hydrocarbons such as butane, pentane, hexane, and heptane; alicyclic hydrocarbons such as cyclopentane, cyclohexane, methylcyclopentane, and methylcyclohexane; aromatic hydrocarbons such as benzene, toluene, and xylene; and hydrocarbons composed of mixtures thereof. By treating impurities such as allenes and acetylenes with organometallic compounds before use in the polymerization reaction, a styrene-butadiene copolymer having a high concentration of active terminals tends to be obtained, and a modified styrene-butadiene rubber with a high modification rate tends to be obtained, which is therefore preferable.

In the polymerization step, a polar compound may be added. By adding a polar compound, styrene can be randomly copolymerized with 1,3-butadiene, and the polar compound also tends to be usable as a vinylizing agent for controlling the microstructure of the 1,3-butadiene portion.

Examples of the polar compound include ethers such as tetrahydrofuran, diethyl ether, dioxane, ethylene glycol dimethyl ether, ethylene glycol dibutyl ether, diethylene glycol dimethyl ether, diethylene glycol dibutyl ether, dimethoxybenzene, and 2,2-bis(2-oxolanyl)propane; tertiary amine compounds such as tetramethylethylenediamine, dipiperidinoethane, trimethylamine, triethylamine, pyridine, and quinuclidine; alkali metal alkoxide compounds such as potassium tert-amylate, potassium tert-butylate, sodium tert-butylate, and sodium amylate; and phosphine compounds such as triphenylphosphine. These polar compounds may be used alone or in combination of two or more.

In the polymerization step, the polymerization temperature is preferably 0°C or higher from the viewpoint of productivity, more preferably 120°C or lower, and particularly preferably 50°C or higher and 100°C or lower. Within such a range, it tends to be possible to sufficiently secure the amount of reaction of the coupling agent with the active terminal after completion of polymerization.

The bound butadiene content in the styrene-butadiene copolymer or modified styrene-butadiene rubber is not particularly limited, but is preferably 40 mass% or more and 100 mass% or less, and more preferably 55 mass% or more and 80 mass% or less.

Note that the bound butadiene content can be determined by measuring the bound styrene content by ultraviolet absorption of the phenyl group, and calculating the bound butadiene content therefrom.

In the styrene-butadiene copolymer or modified styrene-butadiene rubber, the vinyl bond content in the butadiene units is not particularly limited, but is preferably 10 mol% or more and 75 mol% or less, and more preferably 20 mol% or more and 65 mol% or less. When the vinyl bond content is within the above range, it is possible to further improve both the low loss property and the wear resistance performance of a product to which the rubber composition for tires is applied.

Note that, for the modified styrene-butadiene rubber, the vinyl bond content (1,2-bond content) in the butadiene

units can be determined by the method of Hampton [R. R. Hampton, Analytical Chemistry, 21, 923 (1949)].

The alkoxysilyl group possessed by the coupling agent represented by the above general formula (I) tends to react with the active terminal of the styrene-butadiene copolymer, for example, to dissociate alkoxylithium and form a bond between the terminal of the styrene-butadiene copolymer chain and the silicon of the coupling residue. The number of alkoxysilyl groups possessed by the coupling residue is the value obtained by subtracting the number of SiOR groups reduced by the reaction from the total number of SiOR groups possessed by one molecule of the coupling agent. In addition, the azasilacycle group possessed by the coupling agent forms a >N-Li bond and a bond between the terminal of the styrene-butadiene copolymer and the silicon of the coupling residue. Note that the >N-Li bond tends to readily become >NH and LiOH by water or the like during finishing. Also, the unreacted alkoxysilyl group remaining in the coupling agent tends to readily become silanol (Si-OH group) by water or the like during finishing.

The reaction temperature in the reaction step is preferably the same as the polymerization temperature of the styrene-butadiene copolymer, preferably 0°C or higher and 120°C or lower, and more preferably 50°C or higher and 100°C or lower. Further, the temperature change from the end of the polymerization step until the coupling agent is added is preferably 10°C or less, and more preferably 5°C or less.

The reaction time in the reaction step is preferably 10 seconds or more, and more preferably 30 seconds or more. The time from the end of the polymerization step to the start of the reaction step is preferably as short as possible from the viewpoint of coupling rate, and more preferably within 5 minutes.

The mixing in the reaction step may be any of mechanical stirring, stirring by a static mixer, or the like. When the polymerization step is continuous, it is preferable that the reaction step is also continuous. As the reactor in the reaction step, for example, a tank type with a stirrer or a tubular type can be used. The coupling agent may be diluted with an inert solvent and continuously supplied to the reactor. When the polymerization step is batch, the coupling agent may be added to the polymerization reactor, or the reaction step may be performed by transferring to another reactor.

In the above general formula (I), A is preferably represented by any of the following general formulas (II) to (V). When A is represented by any of the general formulas (II) to (V), a modified styrene-butadiene rubber having more excellent performance can be obtained.

[Chem. 14]

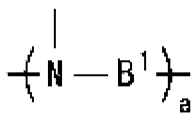

···· (II)

In the above general formula (II), $B^1$ represents a single bond or a hydrocarbon group having 1 to 20 carbon atoms, and a represents an integer of 1 to 10. When a plurality are present, $B^1$ are each independently selected.

[Chem. 15]

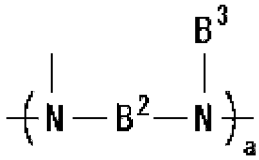

···· (III)

In the above general formula (III), $B^2$ represents a single bond or a hydrocarbon group having 1 to 20 carbon atoms, $B^3$ represents an alkyl group having 1 to 20 carbon atoms, and a represents an integer of 1 to 10. When a plurality are present, $B^2$ and $B^3$ are each independently selected.

[Chem. 16]

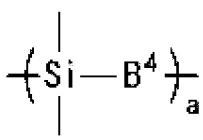

···· (IV)

In the above general formula (IV), $B^4$ represents a single bond or a hydrocarbon group having 1 to 20 carbon

atoms, and a represents an integer of 1 to 10. When a plurality are present, $B^4$ are each independently selected.

[Chem. 17]

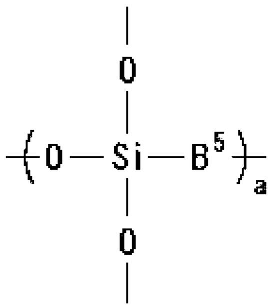

· · · · (V)

In the above general formula (V), $B^5$ represents a single bond or a hydrocarbon group having 1 to 20 carbon atoms, and a represents an integer of 1 to 10. When a plurality are present, $B^5$ are each independently selected.

Regarding $B^1$, $B^2$, $B^4$, and $B^5$ in the above general formulas (II) to (V), examples of the hydrocarbon group having 1 to 20 carbon atoms include an alkylene group having 1 to 20 carbon atoms.

Preferably, in the above general formula (I), A is represented by the above general formula (II) or (III), and k represents 0.

More preferably, in the above general formula (I), A is represented by the above general formula (II) or (III), k represents 0, and in the above general formula (II) or (III), a represents an integer of 2 to 10.

Still more preferably, in the above general formula (I), A is represented by the above general formula (II), k represents 0, and in the above general formula (II), a represents an integer of 2 to 10.

Examples of such coupling agents include bis(3-trimethoxysilylpropyl)-[3-(2,2-dimethoxy-1-aza-2-silacyclopentane)propyl]amine, tris(3-trimethoxysilylpropyl)amine, tris(3-triethoxysilylpropyl)amine, tris(3-trimethoxysilylpropyl)-[3-(2,2-dimethoxy-1-aza-2-silacyclopentane)propyl]-1,3-propanediamine, tetrakis[3-(2,2-dimethoxy-1-aza-2-silacyclopentane)propyl]-1,3-propanediamine, tetrakis(3-trimethoxysilylpropyl)-1,3-propanediamine, tetrakis(3-trimethoxysilylpropyl)-1,3-bisaminomethylcyclohexane, tris(3-trimethoxysilylpropyl)-methyl-1,3-propanediamine, bis[3-(2,2-dimethoxy-1-aza-2-silacyclopentane)propyl]-(3-trimethoxysilylpropyl)-methyl-1,3-propanediamine, and the like. Among these, tetrakis(3-trimethoxysilylpropyl)-1,3-propanediamine and tetrakis(3-trimethoxysilylpropyl)-1,3-bisaminomethylcyclohexane are particularly preferable.

The amount of the compound represented by the above general formula (I) as the coupling agent can be adjusted so that the molar ratio of the styrene-butadiene copolymer to the coupling agent is reacted at a desired stoichiometric ratio, and thereby a desired branching degree tends to be achieved. Specifically, the number of moles of the polymerization initiator is preferably 5.0 times or more, more preferably 6.0 times or more, relative to the number of moles of the coupling agent. In this case, in the general formula (I), the number of functional groups of the coupling agent ($(m-1)\times i + p\times j + k$) is preferably an integer of 5 to 10, and more preferably an integer of 6 to 10.

In order to obtain a modified styrene-butadiene rubber having the specific high molecular weight component, it is preferable that the molecular weight distribution (Mw/Mn) of the styrene-butadiene copolymer is 1.5 or more and 2.5 or less, and more preferably 1.8 or more and 2.2 or less. Further, the obtained modified styrene-butadiene rubber preferably has a single peak detected in the molecular weight curve by GPC.

When the peak molecular weight of the modified styrene-butadiene rubber by GPC is $Mp_1$, and the peak molecular weight of the styrene-butadiene copolymer is $Mp_2$, it is preferable that the following formula is satisfied.

$$(Mp_1/Mp_2) < 1.8\times10-12\times(Mp_2-120\times10^4)^2 + 2$$

$Mp_2$ is more preferably $20\times10^4$ or more and $80\times10^4$ or less, and $Mp_1$ is more preferably $30\times10^4$ or more and $150\times10^4$ or less.

Note that $Mp_1$ and $Mp_2$ are calculated by gel permeation chromatography (GPC).

The modification rate of the modified styrene-butadiene rubber is preferably 30 mass% or more, more preferably 50 mass% or more, and still more preferably 70 mass% or more. When the modification rate is 30 mass% or more, it is possible to further improve both the low loss property and the wear resistance performance of a product to which the rubber composition for tires is applied.

After the reaction step, a deactivator, neutralizer, or the like may be added to the copolymer solution as necessary. Examples of the deactivator include, but are not limited to, water; alcohols such as methanol, ethanol, and

isopropanol. Examples of the neutralizer include, but are not limited to, carboxylic acids such as stearic acid, oleic acid, and versatic acid (a highly branched mixture of carboxylic acids having 9 to 11 carbon atoms, centered on 10); aqueous solutions of inorganic acids, carbon dioxide gas, and the like.

Further, from the viewpoint of preventing gel formation after polymerization and improving stability during processing, it is preferable to add an antioxidant such as 2,6-di-tert-butyl-4-hydroxytoluene (BHT), n-octadecyl-3-(4'-hydroxy-3',5'-di-tert-butylphenyl)propionate, or 2-methyl-4,6-bis[(octylthio)methyl]phenol to the modified styrene-butadiene rubber.

As a method for obtaining the modified styrene-butadiene rubber from the polymer solution, a known method can be used. Examples of such a method include a method in which the solvent is separated by steam stripping or the like, the polymer is filtered, and further dehydrated and dried to obtain the polymer; a method in which the solution is concentrated in a flashing tank and further devolatilized with a vented extruder or the like; and a method in which devolatilization is performed directly with a drum dryer or the like.

The modified styrene-butadiene rubber obtained by reacting the coupling agent represented by the above general formula (I) with the styrene-butadiene copolymer is represented, for example, by the following general formula (VI).

[Chem. 18]

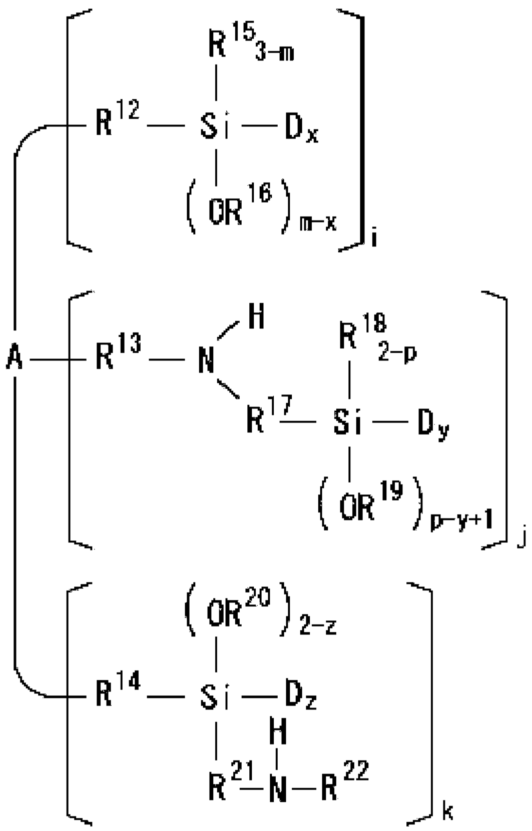

· · · · (VI)

In General Formula (VI), D represents a styrene-butadiene copolymer chain, and it is preferable that the weight-average molecular weight of the styrene-butadiene copolymer chain is $10\times10^4$ to $100\times10^4$. The styrene-butadiene copolymer chain is a constituent unit of the modified styrene-butadiene rubber, and, for example, is a structural unit derived from the styrene-butadiene copolymer, which is produced by reacting a styrene-butadiene copolymer with a coupling agent.

$R^{12}$, $R^{13}$, and $R^{14}$ each independently represent a single bond or an alkylene group having 1 to 20 carbon atoms.

$R^{15}$ and $R^{18}$ each independently represent an alkyl group having 1 to 20 carbon atoms.

$R^{16}$, $R^{19}$, and $R^{20}$ each independently represent a hydrogen atom or an alkyl group having 1 to 20 carbon atoms.

$R^{17}$ and $R^{21}$ each independently represent an alkylene group having 1 to 20 carbon atoms.

$R^{22}$ represents a hydrogen atom or an alkyl group having 1 to 20 carbon atoms.

m and x each represent an integer of 1 to 3, with $x \leq m$, p represents 1 or 2, y represents an integer of 1 to 3, with $y \leq$

(p+1), and z represents an integer of 1 or 2.

Where there are a plurality of D, $R^{12}$ to $R^{22}$, m, p, x, y, and z, each is independent, and may be the same or different.

Further, i represents an integer of 0 to 6, j represents an integer of 0 to 6, k represents an integer of 0 to 6, (i+j+k) represents an integer of 3 to 10, and $((x\times i)+(y\times j)+(z\times k))$ represents an integer of 5 to 30.

A represents an organic group having a hydrocarbon group with 1 to 20 carbon atoms, or at least one atom selected from the group consisting of oxygen atom, nitrogen atom, silicon atom, sulfur atom, and phosphorus atom, and not having an active hydrogen. The hydrocarbon group represented by A includes saturated, unsaturated, aliphatic, and aromatic hydrocarbon groups. Examples of the organic group not having an active hydrogen include organic groups not having a functional group with active hydrogen, such as a hydroxyl group (-OH), secondary amino group (>NH), primary amino group ($-NH_2$), or sulfhydryl group (-SH).

In the above General Formula (VI), it is preferable that A is represented by any one of General Formulae (II) to (V). When A is represented by any one of General Formulae (II) to (V), it is possible to further improve the low loss property and wear resistance performance of a product to which the rubber composition for tires is applied.

--- Modified Styrene-Butadiene Rubber of Third Preferred Embodiment ---

It is also preferable that the styrene-butadiene rubber (SBR) is modified with a modifier containing a compound (alkoxysilane) represented by the following General formula (1) at at least one terminal.

[Chem. 19]

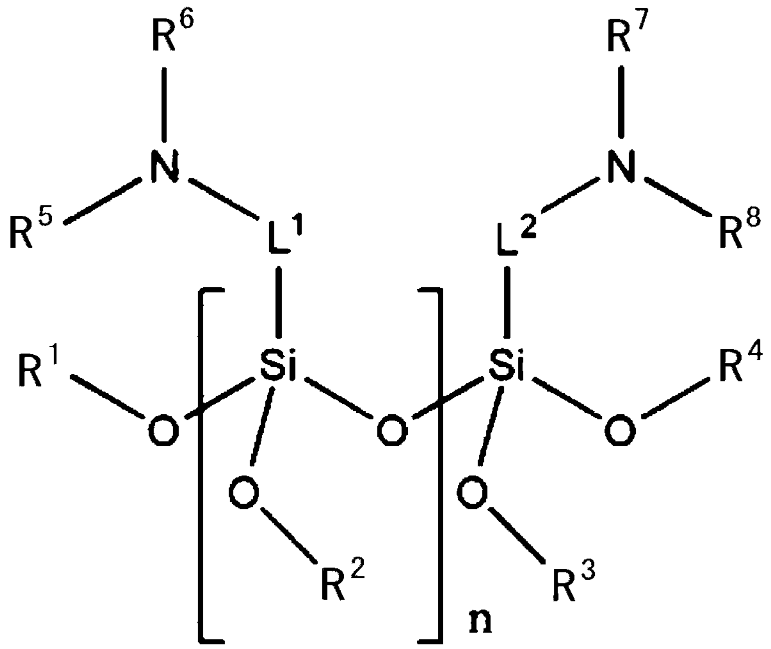

· · · · (1)

By using, as the rubber component, a styrene-butadiene rubber modified with a modifier containing a compound represented by the above General formula (1), which includes an oligosiloxane and a tertiary amino group as filler-affinity functional groups, the dispersibility of fillers such as silica can be enhanced. As a result, since the dispersibility of the filler is improved in the rubber composition for tires of the present disclosure, the low loss property is greatly improved, the rolling resistance of a tire to which the rubber composition for tires is applied can be reduced, and the high fuel efficiency can be improved.

In the above General formula (1), $R^1$ to $R^8$ each independently represent an alkyl group having 1 to 20 carbon atoms; $L^1$ and $L^2$ each independently represent an alkylene group having 1 to 20 carbon atoms; and n represents an integer of 2 to 4.

Specifically, in formula (1), $R^1$ to $R^4$ may each independently be a substituted or unsubstituted alkyl group having 1 to 20 carbon atoms, and when $R^1$ to $R^4$ are substituted, they may each independently be substituted with one or more substituents selected from the group consisting of an alkyl group having 1 to 10 carbon atoms, a cycloalkyl group having 3 to 10 carbon atoms, an alkoxy group having 1 to 10 carbon atoms, a cycloalkoxy group having 4 to 10 carbon atoms, an aryl

group having 6 to 12 carbon atoms, an aryloxy group having 6 to 12 carbon atoms, an alkanoyloxy group (Ra-COO-, where Ra is an alkyl group having 1 to 9 carbon atoms) having 2 to 12 carbon atoms, an aralkyloxy group having 7 to 13 carbon atoms, an arylalkyl group having 7 to 13 carbon atoms, and an alkylaryl group having 7 to 13 carbon atoms.

More specifically, $R^1$ to $R^4$ may each independently be a substituted or unsubstituted alkyl group having 1 to 10 carbon atoms, and even more specifically, $R^1$ to $R^4$ may each independently be a substituted or unsubstituted alkyl group having 1 to 6 carbon atoms.

Further, in formula (1), $R^5$ to $R^8$ each independently represent a substituted or unsubstituted alkyl group having 1 to 20 carbon atoms, specifically, a substituted or unsubstituted alkyl group having 1 to 10 carbon atoms, and more specifically, a substituted or unsubstituted alkyl group having 1 to 6 carbon atoms, and when substituted, may be substituted with a substituent as described above for $R^1$ to $R^4$.

Note that, if $R^5$ to $R^8$ are not alkyl groups but hydrolyzable substituents, the N-$R^5R^6$ and N-$R^7R^8$ bonds may be hydrolyzed to N-H in the presence of water, which may adversely affect the processability of the polymer.

More specifically, in the compound represented by formula (1), $R^1$ to $R^4$ are methyl or ethyl groups, and $R^5$ to $R^8$ can be alkyl groups having 1 to 10 carbon atoms.

It is preferable that the amino groups in the compound represented by formula (1), that is, N-$R^5R^6$ and N-$R^7R^8$, are tertiary amino groups. The tertiary amino group allows the compound represented by formula (1), when used as a modifier, to have even better processability.

Note that, if a protecting group for protecting the amino group is bonded to $R^5$ to $R^8$, or if hydrogen is bonded, it may be difficult to achieve the effects of the compound represented by formula (1). If hydrogen is bonded, the anion reacts with the hydrogen during the modification process and loses reactivity, making the modification reaction itself impossible; if a protecting group is bonded, the modification reaction proceeds, but during post-processing, the protecting group is removed by hydrolysis, resulting in a primary or secondary amino group at the polymer terminal, and the deprotected primary or secondary amino group may cause an increase in viscosity of the compound during subsequent compounding, leading to a decrease in processability.

Further, in the compound represented by formula (1), $L^1$ and $L^2$ each independently represent a substituted or unsubstituted alkylene group having 1 to 20 carbon atoms.

More specifically, $L^1$ and $L^2$ may each independently be an alkylene group having 1 to 10 carbon atoms, and even more specifically, an alkylene group having 1 to 6 carbon atoms such as a methylene group, ethylene group, or propylene group.

Regarding $L^1$ and $L^2$ in the compound represented by formula (1), the closer the distance between the Si atom and the N atom in the molecule, the more excellent the effect. However, if Si is directly bonded to N, the bond between Si and N may be cleaved during subsequent processing steps, and the resulting secondary amino group is likely to be washed away by water during post-processing, making it difficult for the amino group, which promotes bonding with fillers such as silica, to bond with the filler in the produced modified styrene-butadiene rubber, and as a result, the effect of improving the dispersibility of the filler may be reduced. Considering the improvement effect due to the bond length between Si and N, it is even more preferable that $L^1$ and $L^2$ each independently represent an alkylene group having 1 to 3 carbon atoms such as a methylene group, ethylene group, or propylene group, and more specifically, may be a propylene group. $L^1$ and $L^2$ may also be substituted with a substituent as described above for $R^1$ to $R^4$.

Further, it is preferable that the compound represented by formula (1) is any one of the compounds represented by the following structural formulae (1-1) to (1-5). This is because even better low loss property can be achieved.

[Chem. 20]

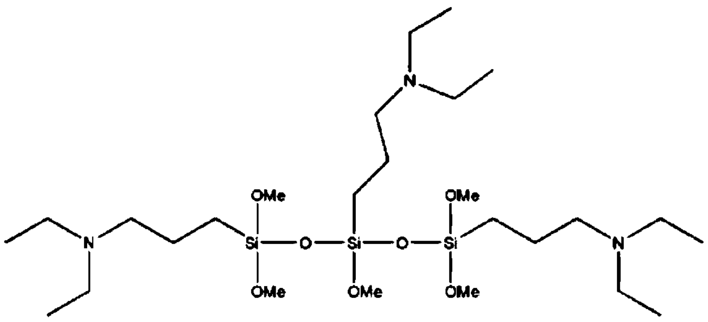

・・・・・(1-1)

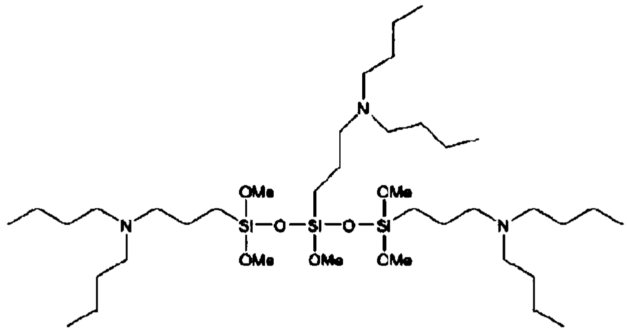

・・・・・(1-2)

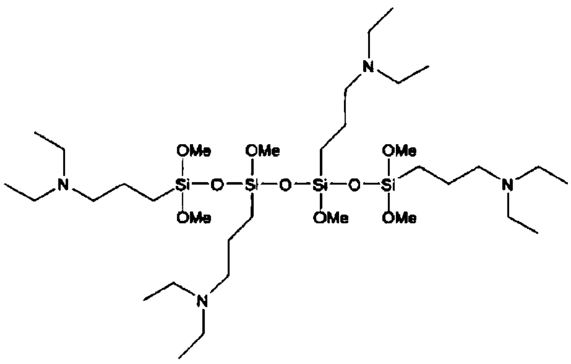

・・・・・(1-3)

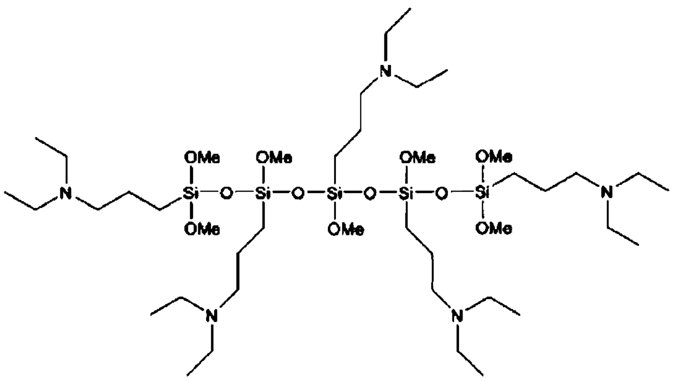

・・・・・(1-4)

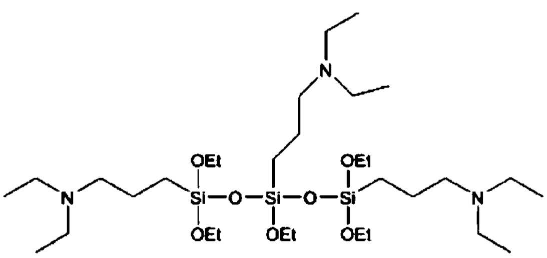

・・・・・(1-5)

In the compound represented by formula (1), while the alkoxysilane structure bonds to the active terminal of the styrene-butadiene copolymer, the Si-O-Si structure and three or more amino groups bonded to the terminal exhibit affinity for fillers such as silica, thereby, compared to conventional modifiers containing one amino group in the molecule, promoting bonding between the filler and the modified styrene-butadiene rubber. In addition, the degree of bonding of the active terminal of the styrene-butadiene copolymer is uniform, and when observing the change in molecular weight distribution before and after coupling, the molecular weight distribution remains constant without increasing after coupling. Therefore, there is no deterioration in the physical properties of the modified styrene-butadiene rubber itself, aggregation of the filler in the rubber composition is prevented, and the dispersibility of the filler can be enhanced, thereby improving the processability of the rubber composition. These effects, in particular, make it possible to improve the balance between high fuel efficiency and wet braking performance when the rubber composition is applied to a tire.

The compound represented by formula (1) can be produced through a condensation reaction represented by the following reaction scheme.

[Chem. 21]

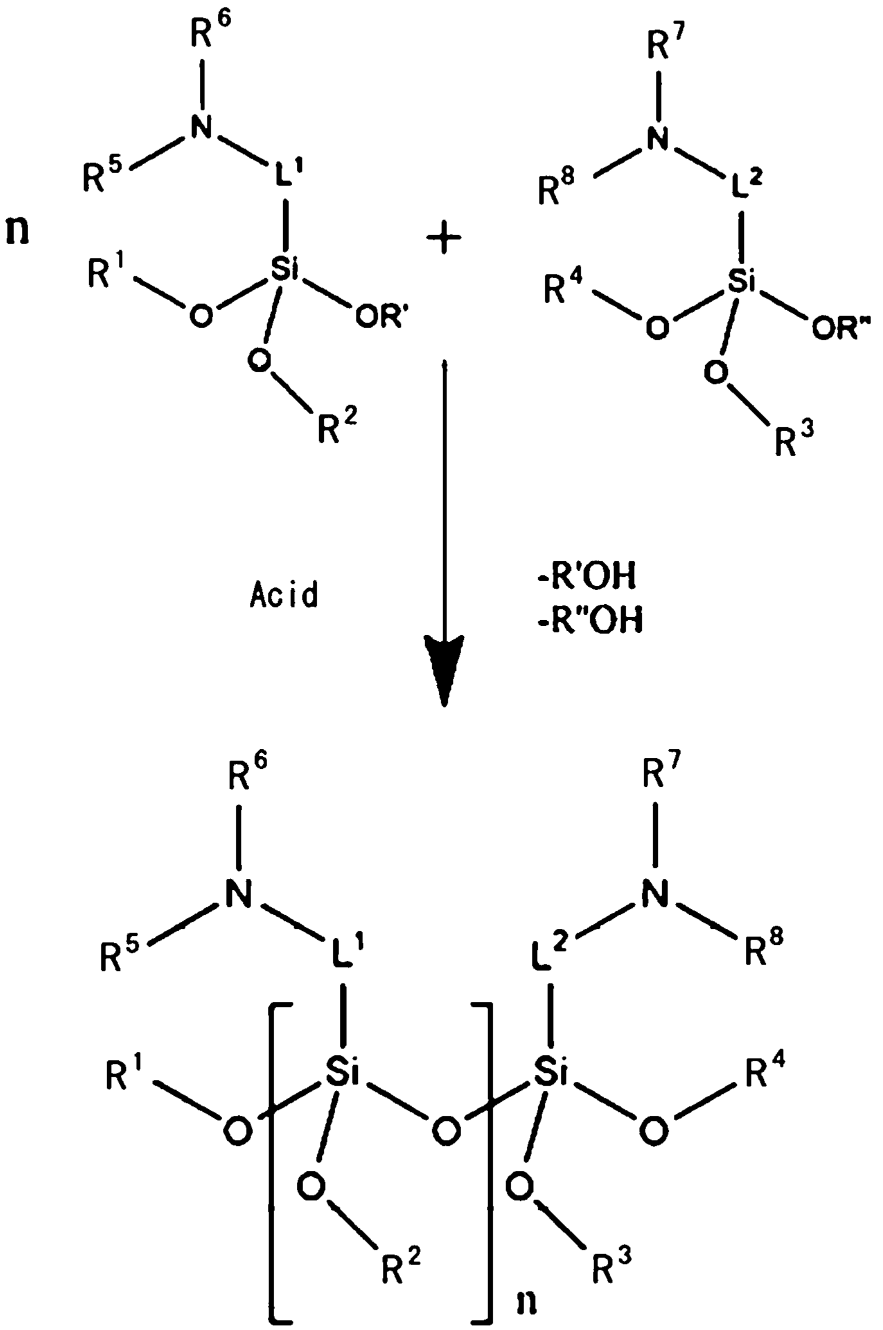


In the above reaction scheme, $R^1$ to $R^8$, $L^1$ and $L^2$, and n are as defined above in formula (1), and R' and R" are arbitrary substituents that do not affect the condensation reaction. For example, R' and R" may each independently be the same as any one of $R^1$ to $R^4$.

The reaction of the above reaction scheme proceeds in the presence of an acid, and the acid can be used without limitation as long as it is generally used in condensation reactions. Those skilled in the art can select the optimal acid according to various process variables such as the type of reactor in which the reaction is carried out, starting materials, reaction temperature, and so on.

The modified styrene-butadiene rubber modified with a modifier containing the compound represented by formula (1) can have a narrow molecular weight distribution (Mw/Mn, also referred to as "polydispersity index (PDI)") of 1.1 to 3.0. If the molecular weight distribution of the modified styrene-butadiene rubber exceeds 3.0 or is less than 1.1, the tensile properties and viscoelasticity may decrease when applied to a rubber composition. Considering the remarkable effect of improving tensile properties and viscoelasticity by controlling the molecular weight distribution of the modified styrene-butadiene rubber, it is preferable that the molecular weight distribution of the modified styrene-butadiene rubber is in the range of 1.3 to 2.0. The modified styrene-butadiene rubber, by using the above modifier, can have a molecular weight distribution similar to that of the styrene-butadiene copolymer before modification.

The molecular weight distribution of the modified styrene-butadiene rubber can be calculated from the ratio (Mw/Mn) of the weight-average molecular weight (Mw) to the number-average molecular weight (Mn). Here, the number-average molecular weight (Mn) is the common average of the individual polymer molecular weights, calculated by measuring the molecular weights of n polymer molecules, summing these molecular weights, and dividing by n, and the weight-average molecular weight (Mw) represents the molecular weight distribution of the polymer composition. The average molecular weight of the whole can be expressed in grams per mole (g/mol).

Further, the weight-average molecular weight and number-average molecular weight are each polystyrene-equivalent molecular weights analyzed by gel permeation chromatography (GPC).

The modified styrene-butadiene rubber may simultaneously satisfy the above molecular weight distribution condition and have a weight-average molecular weight (Mw) of 100,000 g/mol to 4,000,000 g/mol, and more specifically, 300,000 g/mol to 1,500,000 g/mol. The modified styrene-butadiene rubber may have a number-average molecular weight (Mn) of 50,000 g/mol to 2,000,000 g/mol, and more specifically, 200,000 g/mol to 800,000 g/mol.

When the weight-average molecular weight (Mw) of the modified styrene-butadiene rubber is 100,000 g/mol or more and the number-average molecular weight (Mn) is 50,000 g/mol or more, it is possible to suppress a decrease in tensile properties when applied to a rubber composition. Further, when the weight-average molecular weight (Mw) is 4,000,000 g/mol or less and the number-average molecular weight (Mn) is 2,000,000 g/mol or less, it is possible to suppress a decrease in processability of the modified styrene-butadiene rubber, prevent deterioration of the operability of the rubber composition, and sufficiently improve the physical properties of the rubber composition.

More specifically, when the modified styrene-butadiene rubber simultaneously satisfies the above molecular weight distribution, weight-average molecular weight (Mw), and number-average molecular weight (Mn) conditions, the viscoelasticity and processability of the rubber composition can be improved in a well-balanced manner when applied to a rubber composition.

It is preferable that the modified styrene-butadiene rubber has a vinyl bond content in the butadiene portion of 5% or more, more preferably 10% or more, and preferably 60% or less. By setting the vinyl bond content in the butadiene portion within the above range, the glass transition temperature can be adjusted to an appropriate range.

The modified styrene-butadiene rubber may have a Mooney viscosity (MV) at 100°C of 40 to 140, specifically 60 to 100. When the Mooney viscosity is within the above range, even better processability can be exhibited.

The Mooney viscosity can be measured using a Mooney viscometer, for example, the MV2000E from Monsanto, at 100°C, with a rotor speed of 2±0.02 rpm, using a large rotor. The sample used at this time is left at room temperature (23 ±3°C) for 30 minutes or more, then 27±3 g is taken and filled into the die cavity, and the platen is operated to perform the measurement.

As described above, it is preferable that the modified styrene-butadiene rubber is modified at one terminal with a modifier containing a compound represented by the above General formula (1), but it is also preferable that the other terminal is further modified with a modifier containing a compound represented by the following General formula (2). By modifying both terminals of the modified styrene-butadiene rubber, the dispersibility of the filler in the rubber composition is further improved, and it is possible to achieve both high fuel efficiency and wet braking performance at a higher level in a tire to which the rubber composition for tires is applied.

[Chem. 22]

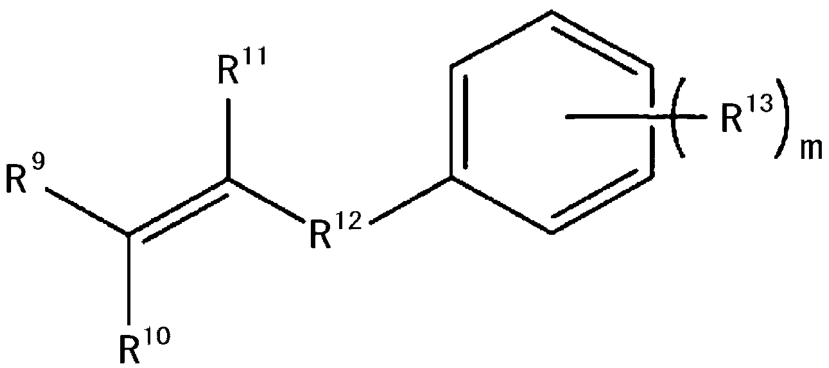

· · · · (2)

In the above General formula (2), $R^9$ to $R^{11}$ each independently represent hydrogen; an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; or a heterocyclic group having 3 to 30 carbon atoms.

Further, in formula (2), $R^{12}$ represents a single bond; a substituted or unsubstituted alkylene group having 1 to 20 carbon atoms; a substituted or unsubstituted cycloalkylene group having 5 to 20 carbon atoms; or a substituted or unsubstituted arylene group having 5 to 20 carbon atoms, where the substituent is an alkyl group having 1 to 10 carbon atoms, a cycloalkyl group having 5 to 10 carbon atoms, or an aryl group having 6 to 20 carbon atoms.

Further, in formula (2), $R^{13}$ represents an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; a heterocyclic group having 3 to 30 carbon atoms; or a functional group represented by the following General Formula (2a) or General Formula (2b), where m is an integer of 1 to 5, and at least one of the $R^{13}$ is a functional group represented by General Formula (2a) or General Formula (2b), and when m is an integer of 2 to 5, the plurality of $R^{13}$ may be the same or different.

[Chem. 23]

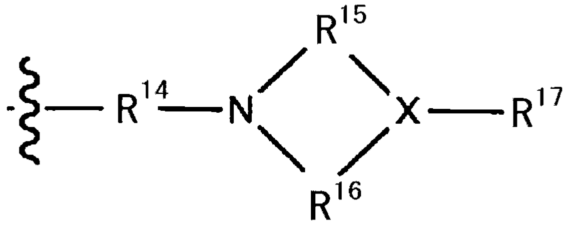

・・・・(2a)

In the above General Formula (2a), $R^{14}$ represents a substituted or unsubstituted alkylene group having 1 to 20 carbon atoms; a substituted or unsubstituted cycloalkylene group having 5 to 20 carbon atoms; or a substituted or unsubstituted arylene group having 6 to 20 carbon atoms, where the substituent is an alkyl group having 1 to 10 carbon atoms, a cycloalkyl group having 5 to 10 carbon atoms, or an aryl group having 6 to 20 carbon atoms.

Further, in Formula (2a), $R^{15}$ and $R^{16}$ each independently represent a substituted or unsubstituted alkylene group having 1 to 20 carbon atoms, substituted or unsubstituted with an alkyl group having 1 to 10 carbon atoms, a cycloalkyl group having 5 to 10 carbon atoms, or an aryl group having 6 to 20 carbon atoms.

Further, in Formula (2a), $R^{17}$ represents hydrogen; an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; or a heterocyclic group having 3 to 30 carbon atoms, and X represents an N, O, or S atom, provided that when X is O or S, $R^{17}$ is not present.

[Chem. 24]

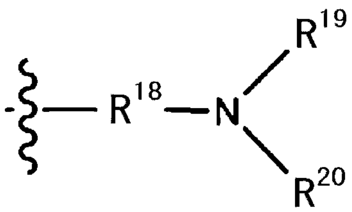

・・・・(2b)

In the above General Formula (2b), $R^{18}$ represents a substituted or unsubstituted alkylene group having 1 to 20 carbon atoms; a substituted or unsubstituted cycloalkylene group having 5 to 20 carbon atoms; or a substituted or unsubstituted arylene group having 6 to 20 carbon atoms, where the substituent is an alkyl group having 1 to 10 carbon atoms, a cycloalkyl group having 5 to 10 carbon atoms, or an aryl group having 6 to 20 carbon atoms.

Further, in Formula (2b), $R^{19}$ and $R^{20}$ each independently represent an alkyl group having 1 to 30 carbon atoms; an alkenyl group having 2 to 30 carbon atoms; an alkynyl group having 2 to 30 carbon atoms; a heteroalkyl group having 1 to 30 carbon atoms; a heteroalkenyl group having 2 to 30 carbon atoms; a heteroalkynyl group having 2 to 30 carbon atoms; a cycloalkyl group having 5 to 30 carbon atoms; an aryl group having 6 to 30 carbon atoms; or a heterocyclic group having 3 to 30 carbon atoms.

In the compound represented by the above general formula (2), $R^9$ to $R^{11}$ are each independently hydrogen; an alkyl group having 1 to 10 carbon atoms; an alkenyl group having 2 to 10 carbon atoms; or an alkynyl group having 2 to 10 carbon atoms, $R^{12}$ is a single bond or an unsubstituted alkylene group having 1 to 10 carbon atoms, $R^{13}$ is an alkyl group

having 1 to 10 carbon atoms; an alkenyl group having 2 to 10 carbon atoms; an alkynyl group having 2 to 10 carbon atoms; or a functional group represented by the above general formula (2a) or general formula (2b), and in the above general formula (2a), $R^{14}$ is an unsubstituted alkylene group having 1 to 10 carbon atoms, $R^{15}$ and $R^{16}$ are each independently an unsubstituted alkylene group having 1 to 10 carbon atoms, $R^{17}$ is an alkyl group having 1 to 10 carbon atoms; a cycloalkyl group having 5 to 20 carbon atoms; an aryl group having 6 to 20 carbon atoms; or a heterocyclic group having 3 to 20 carbon atoms, and in the above general formula (2b), $R^{18}$ is an unsubstituted alkylene group having 1 to 10 carbon atoms, and $R^{19}$ and $R^{20}$ are each independently an alkyl group having 1 to 10 carbon atoms; a cycloalkyl group having 5 to 20 carbon atoms; an aryl group having 6 to 20 carbon atoms; or a heterocyclic group having 3 to 20 carbon atoms.

More specifically, the compound represented by the above general formula (2) may be a compound represented by the following structural formulas (2-1) to (2-3).

[Chem. 25]

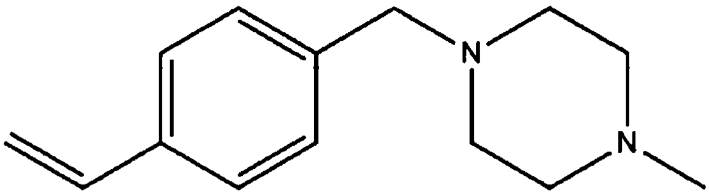

· · · · (2-1)

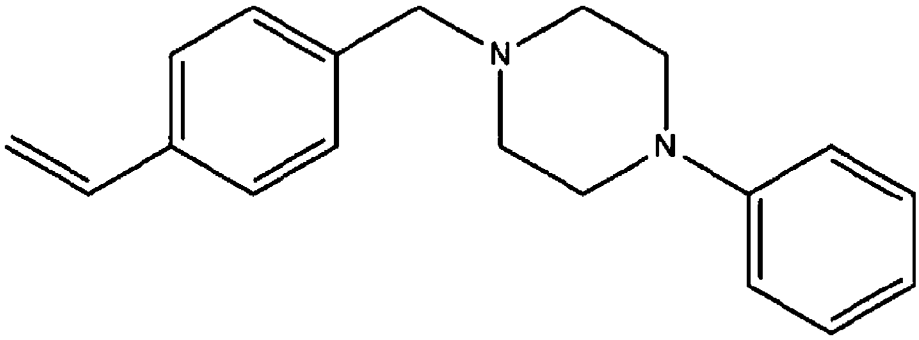

· · · · (2-2)

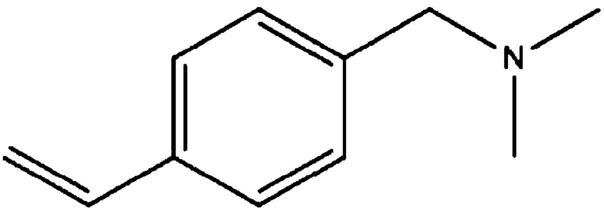

· · · · (2-3)

When the styrene-butadiene copolymer is modified with a modifier containing a compound represented by the above general formula (2), the modifier containing the compound represented by formula (2) is used as a modification initiator.

Specifically, for example, by polymerizing a butadiene monomer and a styrene monomer in the presence of a modifier containing a compound represented by formula (2) in a hydrocarbon solvent, a modification group derived from the compound represented by formula (2) can be introduced into the styrene-butadiene copolymer.

- Other Rubbers -

The rubber component may further contain other rubbers in addition to the isoprene skeleton rubber and the styrene-butadiene rubber. Specific examples of such other rubbers include butadiene rubber (BR), chloroprene rubber (CR), butyl rubber (IIR), halogenated butyl rubber, ethylene-propylene rubber (EPR, EPDM), fluororubber, silicone rubber, urethane rubber, and the like.

As described above, although butadiene rubber (BR) may be included as another rubber, from the viewpoint of preventing a decrease in wet braking performance, it is preferable that butadiene rubber (BR) is not included. By not including butadiene rubber in the rubber component, a decrease in wet braking performance can be suppressed.

(Filler)

The rubber composition for tires of the present disclosure contains a filler. By including a filler, the reinforcing property of the rubber composition is improved. Examples of such fillers include silica, carbon black, and the like.

The content of the filler in the rubber composition for tires is preferably in the range of 40 to 125 parts by mass per 100 parts by mass of the rubber component. When the content of the filler is 40 parts by mass or more per 100 parts by mass of the rubber component, the reinforcement of the tire to which the rubber composition for tires is applied is sufficient, and the wear resistance performance can be further improved. Further, when the content of the filler is 125 parts by mass or less per 100 parts by mass of the rubber component, the wet braking performance can be further improved. From the viewpoint of further lowering the rolling resistance of the tire (improving high fuel efficiency), the content of the filler in the rubber composition for tires is more preferably 45 parts by mass or more, even more preferably 50 parts by mass or more, and still more preferably 55 parts by mass or more, per 100 parts by mass of the rubber component. Further, from the viewpoint of improving the wet braking performance of the tire, the content of the filler in the rubber composition for tires is more preferably 120 parts by mass or less, even more preferably 115 parts by mass or less, and still more preferably less than 100 parts by mass, per 100 parts by mass of the rubber component.

- Silica -

The filler contains silica. Examples of such silica include wet silica (hydrous silicate), dry silica (anhydrous silicate), calcium silicate, aluminum silicate, and the like. Among these, wet silica is preferred. These silicas may be used alone or in combination of two or more.

From the viewpoint of reducing environmental impact, silica derived from plant-based silicate is also preferred as the silica. Such plant-based silicate is present, for example, in plants of the classes Bryopsida (mosses), Pteridophyta (ferns), Equisetopsida (horsetails), Cucurbitaceae, Urticaceae, and Poaceae (grasses). Among these plants, Poaceae (grasses) are preferred. Examples of such Poaceae plants include rice, bamboo, and sugarcane, with rice being particularly preferred among these. Since rice is widely cultivated for food, it can be locally procured in a wide area, and since rice husks are generated in large quantities as industrial waste, it is easy to secure the quantity. Therefore, from the viewpoint of ease of procurement, silica derived from rice husks (hereinafter also referred to as "rice husk silica") is particularly preferred as the silica. By using rice husk silica, rice husks, which are industrial waste, can be effectively utilized, and since raw materials can be locally procured near the tire manufacturing plant, energy and cost for transportation and storage can be reduced, and from various viewpoints, it is environmentally preferable. The rice husk silica may be a powder of rice husk charcoal obtained by carbonizing rice husks by heating, or may be a precipitated silica produced by preparing an alkali silicate aqueous solution by extracting rice husk ash generated when rice husks are combusted as fuel in a biomass boiler with alkali, and producing precipitated silica by a wet process using the alkali silicate aqueous solution. The method for producing the rice husk charcoal is not particularly limited, and various known methods can be used. For example, rice husk charcoal can be obtained by pyrolyzing rice husks by steam roasting using a kiln. The rice husk charcoal thus obtained can be pulverized using a known pulverizer (for example, a ball mill), and by selecting and classifying to a predetermined particle size range, a powder of rice husk charcoal can be obtained. Further, the precipitated silica derived from rice husks can be produced by a method described in JP 2019-38728 A or the like.

The silica preferably has a nitrogen adsorption specific surface area (BET method) of 80 $m^2/g$ or more and less than 330 $m^2/g$. When the nitrogen adsorption specific surface area (BET method) of the silica is 80 $m^2/g$ or more, the product to which the rubber composition for tires is applied can be sufficiently reinforced, and the rolling resistance of the product can be further reduced. Further, when the nitrogen adsorption specific surface area (BET method) of the silica is less than 330 $m^2/g$, the elastic modulus of the rubber composition for tires does not become excessively high, and the wet braking performance of the product to which the rubber composition for tires is applied can be further improved. From the viewpoint of further lowering the rolling resistance and further improving the wear resistance performance of the product, the nitrogen adsorption specific surface area (BET method) of the silica is preferably 110 $m^2/g$ or more, more preferably 130 $m^2/g$ or more, still more preferably 150 $m^2/g$ or more, and particularly preferably 180 $m^2/g$ or more. Further, from the viewpoint of further improving the wet braking performance of the tire, the nitrogen adsorption specific surface area (BET method) of the silica is preferably 300 $m^2/g$ or less, more preferably 280 $m^2/g$ or less, and still more preferably 270 $m^2/g$ or less.

The content of silica in the rubber composition for tires is preferably 25 parts by mass or more, more preferably 28 parts by mass or more, and still more preferably 31 parts by mass or more, per 100 parts by mass of the rubber component, from the viewpoint of improving the mechanical strength of the product to which the rubber composition for tires is applied

and further improving the wear resistance performance. Further, from the viewpoint of further improving the wet braking performance of the tire, the content of silica in the rubber composition for tires is preferably 93 parts by mass or less, more preferably 86 parts by mass or less, and still more preferably less than 75 parts by mass, per 100 parts by mass of the rubber component.

- Carbon Black -

The filler may contain carbon black. Such carbon black can reinforce the rubber composition for tires and improve the wear resistance performance of the product to which the rubber composition for tires is applied.

The carbon black is not particularly limited, and examples include GPF, FEF, HAF, ISAF, and SAF grades of carbon black. These carbon blacks may be used alone or in combination of two or more.

As the carbon black, plant-derived carbon black and carbon black obtained by recycling are particularly preferred. Examples of plant-derived carbon black include those derived from castor oil and rosin oil. Examples of carbon black obtained by recycling include carbon black obtained by pyrolysis of used tires and the like, and carbon black obtained from waste oil.

The content of carbon black in the rubber composition for tires is preferably 12 parts by mass or more, more preferably 14 parts by mass or more, and still more preferably 16 parts by mass or more, per 100 parts by mass of the rubber component, from the viewpoint of improving the wear resistance performance of the product to which the rubber composition for tires is applied. Further, from the viewpoint of wet braking performance of the rubber composition for tires, the content of carbon black in the rubber composition for tires is preferably 56 parts by mass or less, more preferably 45 parts by mass or less, and still more preferably 35 parts by mass or less, per 100 parts by mass of the rubber component.

- Other Fillers -

The filler may contain, in addition to silica and carbon black, inorganic fillers such as clay, talc, calcium carbonate, and aluminum hydroxide.

(Regarding Formula (X))

The rubber composition for tires of the present disclosure satisfies Formula (X):

$$10 \leq A^{0.5} + B^{1.5} \leq 100 \qquad \ldots (X)$$

(wherein A is the content (parts by mass) of the isoprene skeleton rubber in 100 parts by mass of the rubber component, and B is the bound styrene content (mass%) of the styrene-butadiene rubber), and preferably satisfies Formula (Z):

$$10 \leq A^{0.5} + B^{1.5} \leq 85 \quad \ldots (Z)$$

(wherein A is the content (parts by mass) of the isoprene skeleton rubber in 100 parts by mass of the rubber component, and B is the bound styrene content (mass%) of the styrene-butadiene rubber.)

By satisfying Formula (X), the rubber composition for tires of the present disclosure can achieve both high fuel efficiency and wet braking performance, and furthermore, by satisfying Formula (Z), high fuel efficiency can be improved. In addition, by satisfying both Formula (X) and Formula (Y) described below, the rubber composition for tires of the present disclosure can achieve an excellent balance among high fuel efficiency, wet braking performance, and wear resistance performance of the product to which the rubber composition for tires is applied.

When two or more types of styrene-butadiene rubber are used, the bound styrene content of the styrene-butadiene rubber is an average value taking into account their mass ratios. For example, when two types of styrene-butadiene rubber are used, the B in Formula (X): the bound styrene content (mass%) of the styrene-butadiene rubber is calculated as follows.

When the two types of styrene-butadiene rubber are referred to as styrene-butadiene rubber 1 and styrene-butadiene rubber 2, respectively,

$$B = x \times a / (a + b) + y \times b / (a + b)$$

(x: bound styrene content (mass%) of styrene-butadiene rubber 1;

y: bound styrene content (mass%) of styrene-butadiene rubber 2;
a: content (parts by mass) of styrene-butadiene rubber 1; and
b: content (parts by mass) of styrene-butadiene rubber 2).

Similarly, when n types of styrene-butadiene rubber are used, if the n-th styrene-butadiene rubber is referred to as "$SBR_n$", the following formula:

$$B = \Sigma \text{ (bound styrene content of } SBR_n \times \text{ content of } SBR_n) / \Sigma \text{ (content of } SBR_n)$$

can be used for calculation.
The $[A^{0.5} + B^{1.5}]$ in Formula (X) is preferably 15 or more, more preferably 25 or more, still more preferably 30 or more, and particularly preferably 35 or more, from the viewpoint of achieving both high fuel efficiency and wet braking performance. Also, from the same viewpoint, it is preferably 85 or less, more preferably 80 or less, still more preferably 75 or less, and particularly preferably 70 or less.
The $[A^{0.5} + B^{1.5}]$ in Formula (X) can be adjusted by changing the amounts of various rubbers contained in the rubber component. For example, the $[A^{0.5} + B^{1.5}]$ in Formula (X) can be increased by increasing the content of natural rubber in the rubber component, using styrene-butadiene rubber with a higher bound styrene content, or, when using two or more types of styrene-butadiene rubber, increasing the amount of styrene-butadiene rubber with a higher bound styrene content. Conversely, the $[A^{0.5} + B^{1.5}]$ in Formula (X) can be decreased by reducing the content of natural rubber in the rubber component, using styrene-butadiene rubber with a lower bound styrene content, blending rubbers other than styrene-butadiene rubber such as butadiene rubber, or, when using two or more types of styrene-butadiene rubber, increasing the amount of styrene-butadiene rubber with a lower bound styrene content.

(Regarding Formula (Y))

The rubber composition for tires of the present disclosure satisfies Formula (Y):

$$0.55 \leq C/D \leq 0.75 \qquad \ldots \text{(Y)}$$

(wherein C is the content (parts by mass) of the silica relative to 100 parts by mass of the rubber component, and D is the content (parts by mass) of the filler relative to 100 parts by mass of the rubber component.)
By satisfying Formula (Y), the rubber composition for tires can ensure wear resistance performance. Furthermore, by satisfying both Formula (X) and Formula (Y) described above, the rubber composition for tires can achieve an excellent balance among high fuel efficiency, wet braking performance, and wear resistance performance of the product to which the rubber composition for tires is applied.
The [C/D] in Formula (Y) is 0.55 or more, preferably 0.57 or more, from the viewpoint of ensuring wear resistance performance. Also, from the same viewpoint, it is 0.75 or less, preferably 0.73 or less.
The [C/D] in Formula (Y) can be adjusted by adjusting the content of silica contained in the filler, the total amount of filler, and the like.

(Resin Component)

The rubber composition for tires of the present disclosure may contain a resin component. The resin component is not particularly limited, and various resin components can be used. By including a resin component in the rubber composition for tires of the present disclosure, the wet braking performance of the product to which the rubber composition for tires is applied can be improved.
Although not limited thereto, the resin component is preferably at least partially hydrogenated and has a difference in SP value (solubility parameter) from the isoprene skeleton rubber of 1.40 $(cal/cm^3)^{1/2}$ or less. In this case, the compatibility with the isoprene skeleton rubber is high, the mobility of the rubber component is controlled, and the hysteresis loss ($\tan\delta$) in the low temperature region can be improved, so that the wet braking performance of the product to which the rubber composition for tires is applied is improved. The difference in SP value between the resin component and the isoprene skeleton rubber is preferably 1.35 $(cal/cm^3)^{1/2}$ or less, more preferably 0.50 $(cal/cm^3)^{1/2}$ or less, still more preferably 0.45 $(cal/cm^3)^{1/2}$ or less, even more preferably 0.3 $(cal/cm^3)^{1/2}$ or less, and particularly preferably 0.25 $(cal/cm^3)^{1/2}$ or less, from the viewpoint of further improving compatibility. When the difference in SP value between the resin component and the isoprene skeleton rubber is 0.50 $(cal/cm^3)^{1/2}$ or less, the compatibility between the resin component and the isoprene skeleton rubber is further improved, and the wet braking performance of the product to which the rubber composition is applied is further improved.

Note that the SP values (solubility parameters) of the isoprene skeleton rubber and the resin component are calculated according to the Fedors method.

Further, the mass ratio of the resin component to the isoprene skeleton rubber [mass ratio of resin component/isoprene skeleton rubber] is preferably 0.5 or more. In this case, the wet braking performance of the product to which the rubber composition for tires is applied can be further improved. The mass ratio of the resin component to the isoprene skeleton rubber [mass ratio of resin component/isoprene skeleton rubber] is preferably 0.65 or more, more preferably 0.7 or more, still more preferably 0.8 or more, and preferably 2.0 or less, more preferably 1.9 or less, and still more preferably 1.8 or less.

The content of the resin component is preferably 1 part by mass or more and less than 50 parts by mass per 100 parts by mass of the rubber component. When the content of the resin component in the rubber composition is 1 part by mass or more per 100 parts by mass of the rubber component, the effect of the resin component is sufficiently exhibited, and when it is less than 50 parts by mass, the resin component is less likely to precipitate from the tire, and the effect of the resin component can be sufficiently exhibited. From the viewpoint of further enhancing the effect of the resin component, the content of the resin component in the rubber composition is preferably 5 parts by mass or more, more preferably 7 parts by mass or more, even more preferably 9 parts by mass or more, still more preferably 15 parts by mass or more, and most preferably 17 parts by mass or more, per 100 parts by mass of the rubber component. Further, from the viewpoint of suppressing the precipitation of the resin component from the tire and suppressing the deterioration of the tire appearance, the content of the resin component in the rubber composition is more preferably 45 parts by mass or less, and even more preferably 40 parts by mass or less, per 100 parts by mass of the rubber component.

The resin component preferably has a softening point higher than 110°C and a weight-average molecular weight in terms of polystyrene of 200 to 1600 g/mol. By applying a rubber composition for tires containing such a resin component to a product, the wear resistance performance of the product can be further improved.

Here, the softening point of the resin component is measured in accordance with JIS-K2207-1996 (ring and ball method).

Further, the weight-average molecular weight of the resin component is measured by gel permeation chromatography (GPC), and the value in terms of polystyrene is calculated.

When the softening point of the resin component is higher than 110°C, the product to which the rubber composition for tires is applied can be sufficiently reinforced, and the wear resistance performance can be further improved. From the viewpoint of the wear resistance performance of the tire, the softening point of the resin component is more preferably 116°C or higher, even more preferably 120°C or higher, still more preferably 123°C or higher, and most preferably 127°C or higher. Further, from the viewpoint of processability, the softening point of the resin component is preferably 160°C or lower, more preferably 150°C or lower, even more preferably 145°C or lower, still more preferably 141°C or lower, and most preferably 136°C or lower.

When the weight-average molecular weight in terms of polystyrene of the resin component is 200 g/mol or more, the resin component is less likely to precipitate from the tire, and the effect of the resin component can be sufficiently exhibited, and when it is 1600 g/mol or less, the resin component is easily compatible with the rubber component.

From the viewpoint of suppressing the precipitation of the resin component from the tire and suppressing the deterioration of the tire appearance, the weight-average molecular weight in terms of polystyrene of the resin component is preferably 500 g/mol or more, more preferably 550 g/mol or more, even more preferably 600 g/mol or more, still more preferably 650 g/mol or more, and most preferably 700 g/mol or more. Further, from the viewpoint of enhancing the compatibility of the resin component with the rubber component and further enhancing the effect of the resin component, the weight-average molecular weight in terms of polystyrene of the resin component is more preferably 1570 g/mol or less, even more preferably 1530 g/mol or less, still more preferably 1500 g/mol or less, even more preferably 1470 g/mol or less, still more preferably 1430 g/mol or less, even more preferably 1400 g/mol or less, still more preferably 1370 g/mol or less, even more preferably 1330 g/mol or less, still more preferably 1300 g/mol or less, even more preferably 1200 g/mol or less, still more preferably 1100 g/mol or less, even more preferably 1000 g/mol or less, and most preferably 950 g/mol or less.

The ratio ($Ts_{HR}/Mw_{HR}$) of the softening point ($Ts_{HR}$) (unit: °C) of the resin component to the weight-average molecular weight ($Mw_{HR}$) (unit: g/mol) in terms of polystyrene of the resin component is preferably 0.07 or more, more preferably 0.083 or more, even more preferably 0.095 or more, still more preferably 0.104 or more, even more preferably 0.125 or more, still more preferably 0.135 or more, even more preferably 0.14 or more, and most preferably 0.141 or more. Further, the ratio ($Ts_{HR}/Mw_{HR}$) is preferably 0.25 or less, more preferably 0.24 or less, even more preferably 0.23 or less, still more preferably 0.19 or less, even more preferably 0.18 or less, and most preferably 0.17 or less.

The weight-average molecular weight in terms of polystyrene is measured by gel permeation chromatography (GPC) under the following conditions to determine the average molecular weight of the resin and calculate the weight-average molecular weight in terms of polystyrene.

- Column temperature: 40°C
- Injection volume: 50 μL

- Carrier and flow rate: tetrahydrofuran 0.6 mL/min
- Sample preparation: about 2.5 mg of resin component dissolved in 10 mL of tetrahydrofuran

The above-mentioned hydrogenated resin component refers to a resin obtained by reduction hydrogenation of a resin.

Examples of the resin serving as a raw material for the hydrogenated resin component include $C_5$ resins, $C_5$-$C_9$ resins, $C_9$ resins, terpene resins, dicyclopentadiene resins, terpene-aromatic compound resins, and the like. These resins may be used alone or in combination of two or more.

Examples of the $C_5$ resin include aliphatic petroleum resins obtained by (co)polymerizing a $C_5$ fraction obtained by thermal cracking of naphtha in the petrochemical industry.

The $C_5$ fraction usually contains olefinic hydrocarbons such as 1-pentene, 2-pentene, 2-methyl-1-butene, 2-methyl-2-butene, 3-methyl-1-butene, and diolefinic hydrocarbons such as 2-methyl-1,3-butadiene, 1,2-pentadiene, 1,3-pentadiene, 3-methyl-1,2-butadiene, and the like. The $C_5$ resin may be a commercially available product.

The $C_5$-$C_9$ resin refers to a $C_5$-$C_9$ synthetic petroleum resin, and examples of the $C_5$-$C_9$ resin include, for example, solid polymers obtained by polymerizing a petroleum-derived $C_5$-$C_{11}$ fraction using a Friedel-Crafts catalyst such as $AlCl_3$ or $BF_3$, and more specifically, copolymers mainly composed of styrene, vinyltoluene, $\alpha$-methylstyrene, indene, and the like.

As the $C_5$-$C_9$ resin, a resin with a small amount of $C_9$ or higher components is preferable from the viewpoint of compatibility with the rubber component. Here, "a small amount of $C_9$ or higher components" means that the content of $C_9$ or higher components in the total resin is less than 50% by mass, preferably 40% by mass or less. The $C_5$-$C_9$ resin may be a commercially available product.

The $C_9$ resin refers to a $C_9$ synthetic petroleum resin, and refers to, for example, a solid polymer obtained by polymerizing a $C_9$ fraction using a Friedel-Crafts catalyst such as $AlCl_3$ or $BF_3$.

Examples of the $C_9$ resin include copolymers mainly composed of indene, $\alpha$-methylstyrene, vinyltoluene, and the like.

The terpene resin is a solid resin obtained by compounding turpentine oil, which is obtained simultaneously with rosin from pine trees, or a polymerized component separated therefrom, and polymerizing it using a Friedel-Crafts catalyst, and includes $\beta$-pinene resin, $\alpha$-pinene resin, and the like. As a representative example of a terpene-aromatic compound resin, terpene-phenol resin can be mentioned. This terpene-phenol resin can be obtained by reacting terpenes and various phenols using a Friedel-Crafts catalyst, or further condensing with formalin. There is no particular limitation on the terpenes as raw materials, but monoterpene hydrocarbons such as $\alpha$-pinene and limonene are preferable, those containing $\alpha$-pinene are more preferable, and $\alpha$-pinene is particularly preferable. The skeleton may also contain styrene or the like.

The dicyclopentadiene resin refers to a resin obtained by polymerizing dicyclopentadiene using a Friedel-Crafts catalyst such as $AlCl_3$ or $BF_3$.

The resin serving as a raw material for the hydrogenated resin component may include, for example, a resin obtained by copolymerizing a $C_5$ fraction and dicyclopentadiene (DCPD) ($C_5$-DCPD resin).

Here, when the content of dicyclopentadiene-derived components in the total resin is 50% by mass or more, the $C_5$-DCPD resin is included in the dicyclopentadiene resin. When the content of dicyclopentadiene-derived components in the total resin is less than 50% by mass, the $C_5$-DCPD resin is included in the $C_5$ resin. The same applies even if a small amount of a third component or the like is contained.

From the viewpoint of enhancing the compatibility between the rubber component and the resin component, further improving the wet braking performance of the product to which the rubber composition for tires is applied, and further lowering the rolling resistance, the resin component is preferably at least one selected from the group consisting of hydrogenated $C_5$ resin, hydrogenated $C_5$-$C_9$ resin, hydrogenated dicyclopentadiene resin (hydrogenated DCPD resin), and hydrogenated terpene resin, more preferably at least one selected from the group consisting of hydrogenated $C_5$ resin and hydrogenated $C_5$-$C_9$ resin, and even more preferably hydrogenated $C_5$ resin. Further, it is preferable that the resin is a resin having at least a hydrogenated DCPD structure or a hydrogenated cyclic structure in the monomer.

(Styrenic Thermoplastic Elastomer)

The rubber composition for tires of the present disclosure may further contain a styrenic thermoplastic elastomer (TPS). The styrenic thermoplastic elastomer (TPS) has a styrenic polymer block (hard segment) and a conjugated diene-based polymer block (soft segment), wherein the styrenic polymer portion forms a physical crosslink as a bridging point, while the conjugated diene-based polymer block imparts rubber elasticity. The double bonds of the conjugated diene-based polymer block (soft segment) may be partially or wholly hydrogenated.

Note that, while the styrenic thermoplastic elastomer (TPS) is thermoplastic, the rubber component (preferably, diene rubber) is not thermoplastic. Therefore, in the present specification, the styrenic thermoplastic elastomer (TPS) is

not included in the rubber component.

The content of the styrenic thermoplastic elastomer (TPS) is preferably in the range of 1 to 30 parts by mass per 100 parts by mass of the rubber component.

Examples of the styrenic thermoplastic elastomer (TPS) include at least one selected from the group consisting of styrene/butadiene/styrene (SBS) copolymer, styrene/isoprene/styrene (SIS) block copolymer, styrene/butadiene/isoprene/styrene (SBIS) block copolymer, styrene/isoprene (SI) block copolymer, styrene/butadiene/isoprene (SBI) block copolymer, styrene/ethylene/butylene/styrene (SEBS) block copolymer, styrene/ethylene/propylene/styrene (SEPS) block copolymer, styrene/ethylene/ethylene/propylene/styrene (SEEPS) block copolymer, styrene/ethylene/butylene (SEB) block copolymer, and styrene/ethylene/ethylene/propylene (SEEP) block copolymer.

(Others)

The rubber composition for tires of the present disclosure may, in addition to the above-described rubber component, filler, resin component, and styrenic thermoplastic elastomer, further contain, as necessary, various components commonly used in the rubber industry, such as silane coupling agents, antioxidants, waxes, softeners, processing aids, stearic acid, zinc oxide (zinc white), vulcanization accelerators, vulcanizing agents, and the like, as appropriate within a range not impairing the object of the present disclosure. Commercially available products can be suitably used as these compounding agents.

- Silane Coupling Agent -

Since the rubber composition for tires of the present disclosure contains silica, it is preferable to contain a silane coupling agent in order to enhance the effect of the silica. Examples of the silane coupling agent include bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropylbenzothiazolyltetrasulfide, 3-triethoxysilylpropylbenzothiazolyltetrasulfide, 3-triethoxysilylpropyl methacrylate monosulfide, 3-trimethoxysilylpropyl methacrylate monosulfide, bis(3-dimethoxymethylsilylpropyl)tetrasulfide, 3-mercaptopropyldimethoxymethylsilane, dimethoxymethylsilylpropyl-N,N-dimethylthiocarbamoyltetrasulfide, dimethoxymethylsilylpropylbenzothiazolyltetrasulfid e, and the like.

The content of the silane coupling agent is preferably in the range of 2 to 20 parts by mass, more preferably in the range of 5 to 15 parts by mass, per 100 parts by mass of the silica.

- Antioxidant -

Examples of the antioxidant include N-(1,3-dimethylbutyl)-N'-phenyl-p-phenylenediamine (6C), 2,2,4-trimethyl-1,2-dihydroquinoline polymer (TMDQ), 6-ethoxy-2,2,4-trimethyl-1,2-dihydroquinoline (AW), N,N'-diphenyl-p-phenylenediamine (DPPD), and the like.

The content of the antioxidant is not particularly limited, but is preferably 0.1 part by mass or more and 5 parts by mass or less, more preferably 1 part by mass or more and 4 parts by mass or less, per 100 parts by mass of the rubber component.

- Wax -

Examples of the wax include, for example, paraffin wax, microcrystalline wax, and the like. The content of the wax is not particularly limited, but is preferably 0.1 part by mass or more and 5 parts by mass or less, more preferably 1 part by mass or more and 4 parts by mass or less, per 100 parts by mass of the rubber component.

- Zinc Oxide (Zinc White) -

The content of the zinc oxide (zinc white) is not particularly limited, but is preferably 0.1 part by mass or more and 10 parts by mass or less, more preferably 1 part by mass or more and 8 parts by mass or less, per 100 parts by mass of the rubber component.

- Vulcanization Accelerator -

Examples of the vulcanization accelerator include sulfenamide vulcanization accelerators, guanidine vulcanization accelerators, thiazole vulcanization accelerators, thiuram vulcanization accelerators, dithiocarbamate vulcanization accelerators, and the like. These vulcanization accelerators may be used alone or in combination of two or more. The content of the vulcanization accelerator is not particularly limited, but is preferably 0.1 part by mass or more and 5 parts by mass or less, more preferably 0.2 part by mass or more and 4 parts by mass or less, per 100 parts by mass of the rubber component.

- Vulcanizing Agent -

Examples of the vulcanizing agent include sulfur and the like. The content of the vulcanizing agent is preferably 2.5 parts by mass or less as sulfur, and more preferably 1.4 parts by mass or more and 2.5 parts by mass or less, per 100 parts by mass of the rubber component. When the content of the vulcanizing agent is within the above range, it is possible to suppress a decrease in wet braking performance. Further, the content of the vulcanizing agent is more preferably 1.6 parts by mass or more and 2.3 parts by mass or less, and most preferably 1.7 parts by mass or more and 2.2 parts by mass or less, per 100 parts by mass of the rubber component.

(Method for Producing Rubber Composition for Tires)

The method for producing the rubber composition for tires is not particularly limited, but, for example, it can be produced by compounding the above-described rubber component and filler with various components appropriately selected as necessary, followed by kneading, warming, extrusion, and the like. Further, by vulcanizing the obtained rubber composition, a vulcanized rubber can be obtained.

As described above, by adjusting the amounts of various rubbers contained in the rubber component, it is possible to produce a rubber composition for tires satisfying formula (X). Further, by adjusting the amount of silica contained in the filler and the total amount of the filler, it is possible to produce a rubber composition for tires satisfying formula (Y).

The kneading conditions are not particularly limited, and various conditions such as the input volume of the kneading apparatus, the rotational velocity of the rotor, ram pressure, kneading temperature, kneading time, and the type of kneading apparatus can be appropriately selected according to the purpose. Examples of the kneading apparatus include, in general, Banbury mixers, Intermix, kneaders, rolls, and the like, which are commonly used for kneading rubber compositions.

The conditions for the warming are not particularly limited, and various conditions such as the warming temperature, warming time, and warming apparatus can be appropriately selected according to the intended purpose. As the warming apparatus, a warming roll machine or the like, which is commonly used for warming rubber compositions, can be employed.

The conditions for the extrusion are also not particularly limited, and various conditions such as extrusion time, extrusion speed, extrusion apparatus, and extrusion temperature can be appropriately selected according to the intended purpose. As the extrusion apparatus, an extruder or the like, which is commonly used for extruding rubber compositions, can be employed. The extrusion temperature can be determined as appropriate.

The apparatus, method, and conditions for vulcanization are not particularly limited and can be appropriately selected according to the intended purpose. As the apparatus for vulcanization, a molding vulcanizer using a mold, which is commonly used for vulcanizing rubber compositions, can be employed. As for the vulcanization conditions, the temperature is, for example, about 100 to 190°C.

(Tread Rubber)

The tread rubber of the present disclosure is characterized by using the above-described rubber composition for tires. Since the tread rubber of the present disclosure uses the above-described rubber composition for tires, when applied to a tire, it is possible to achieve an excellent balance among high fuel efficiency, wet braking performance, and wear resistance performance of the tire.

It should be noted that the tread rubber of the present disclosure may be applied to new tires or to retreaded tires.

(Tire)

The tire of the present disclosure is characterized by comprising the above-described tread rubber. Since the tire of the present disclosure comprises the above-described tread rubber, it exhibits an excellent balance among high fuel

efficiency, wet braking performance, and wear resistance performance.

(Method for Producing Tread Rubber and Tire)

The tire of the present disclosure may be obtained by molding and then vulcanizing an unvulcanized rubber composition according to the type of tire to be applied, or by molding using a semi-vulcanized rubber that has undergone a preliminary vulcanization step and then further subjecting it to main vulcanization. It should be noted that the tire of the present disclosure is preferably a pneumatic tire, and as the gas to be filled in the pneumatic tire, in addition to ordinary air or air with adjusted oxygen partial pressure, inert gases such as nitrogen, argon, or helium can be used.

[Examples]

Hereinafter, the present disclosure will be described in more detail with reference to examples, but the present disclosure is not limited to the following examples in any way.

(Method for Analyzing Rubber Component)

The rubber component was analyzed by the following methods.

(1) Bound Styrene Content

A synthesized styrene-butadiene rubber was used as a sample, and 100 mg of the sample was made up to 100 mL with chloroform, dissolved, and used as a measurement sample. The bound styrene content (mass%) in 100 mass% of the sample was measured based on the absorbance at the ultraviolet absorption wavelength (around 254 nm) due to the phenyl group of styrene. As the measurement apparatus, a spectrophotometer "UV-2450" manufactured by Shimadzu Corporation was used.

(2) Glass Transition Temperature (Tg)

A synthesized styrene-butadiene rubber was used as a sample, and using a DSC250 manufactured by TA Instruments, under a helium flow of 50 mL/min, the temperature was raised from -100°C at a rate of 20°C/min while recording the DSC curve, and the peak top (inflection point) of the DSC differential curve was taken as the glass transition temperature.

(3) SP Value (Solubility Parameter)

The SP values (solubility parameters) of natural rubber (isoprene skeleton rubber) and styrene-butadiene rubber were calculated according to the Fedors method.

(Method for Analyzing Resin Component)

The resin component was analyzed by the following methods.

(4) Softening Point

The softening point of the resin component was measured in accordance with JIS-K2207-1996 (ring and ball method).

(5) Weight-Average Molecular Weight

The average molecular weight of the resin component was measured by gel permeation chromatography (GPC) under the following conditions, and the weight-average molecular weight in terms of polystyrene was calculated.

- Column temperature: 40°C
- Injection volume: 50 μL
- Carrier and flow rate: tetrahydrofuran 0.6 mL/min
- Sample preparation: about 2.5 mg of resin component dissolved in 10 mL of tetrahydrofuran

(6) SP Value (Solubility Parameter)

The SP value (solubility parameter) of the resin component was calculated according to the Fedors method.

(Preparation of Rubber Composition)

Each component was blended and kneaded according to the formulations shown in Tables 1 and 2 below to prepare the rubber compositions of the examples and comparative examples. In Tables 1 and 2, the amount of each component is the amount (parts by mass) per 100 parts by mass of the rubber component.

[Table 1]

| | Blending amount (parts by mass) |
|---|---|
| Natural rubber *1 | According to Table 2 |
| SBR1 *2 | According to Table 2 |
| SBR2 *3 | According to Table 2 |
| BR *4 | According to Table 2 |
| Carbon black *5 | According to Table 2 |
| Silica *6 | According to Table 2 |
| Silane coupling agent *7 | According to Table 2 |
| Resin component *8 | According to Table 2 |
| Antioxidant *9 | 2.0 |
| Wax *10 | 2.0 |
| Zinc oxide | 2.0 |
| Vulcanization accelerator A *11 | 0.8 |
| Vulcanization accelerator B *12 | 1.7 |
| Sulfur | 1.4 |

*1 Natural rubber: TSR#20, SP value = 8.20 $(cal/cm^3)^{1/2}$
*2 SBR1: Hydrocarbyloxy silane compound-modified styrene-butadiene rubber synthesized by the method described below, Tg = - 65°C, SP value = 8.65 $(cal/cm^3)^{1/2}$, bound styrene content = 10 mass%
*3 SBR2: Modified styrene-butadiene rubber obtained by modifying the terminal of styrene-butadiene rubber obtained using butyllithium as an initiator with N-(1,3-dimethylbutylidene)-3-triethoxysilyl-1-propanamine, Tg = -38°C, SP value = 8.95 $(cal/cm^3)^{1/2}$, bound styrene content = 35 mass%
*4 BR: Manufactured by UBE Elastomer Co., Ltd., trade name "BR150"
*5 Carbon black: Manufactured by Asahi Carbon Co., Ltd., trade name "Asahi #70"
*6 Silica: Manufactured by Tosoh Silica Corporation, trade name "Nipsil AQ"
*7 Silane coupling agent: Manufactured by Evonik, trade name "Si75"
*8 Resin component: Hydrogenated $C_5$-based resin, manufactured by Eastman, trade name "Registered Trademark Impera P1780", softening point = 130°C, weight-average molecular weight (Mw) = 909 g/mol, SP value = 8.35 $(cal/cm^3)^{1/2}$
*9 Antioxidant: Manufactured by Ouchi Shinko Chemical Industrial Co., Ltd., trade name "Nocrack 6C"
*10 Wax: Manufactured by Nippon Seiro Co., Ltd., trade name "Ozoace 0701"
*11 Vulcanization accelerator A: Manufactured by Ouchi Shinko Chemical Industrial Co., Ltd., trade name "Nocceler DM-P"
*12 Vulcanization accelerator B: Manufactured by Sanshin Chemical Industry Co., Ltd., trade name "Sanceler NS-G"

(Synthesis Method of SBR1 (*2))

In a dried, nitrogen-substituted 800 mL pressure-resistant glass vessel, a cyclohexane solution of 1,3-butadiene and a cyclohexane solution of styrene were added so that 1,3-butadiene was 67.5 g and styrene was 7.5 g, 0.6 mmol of 2,2-di-tetrahydrofurylpropane was added, and after adding 0.8 mmol of n-butyllithium, polymerization was carried out at 50°C for 1.5 hours. To the polymerization reaction system, in which the polymerization conversion rate at this time was almost

100%, 0.72 mmol of N,N-bis(trimethylsilyl)-3-[diethoxy(methyl)silyl]propylamine was added as a modifier, and a modification reaction was carried out at 50°C for 30 minutes. Thereafter, 2 mL of a 5 mass% isopropanol solution of 2,6-di-t-butyl-p-cresol (BHT) was added to terminate the reaction, and the modified SBR was obtained by drying according to a conventional method.

As a result of measuring the microstructure of the obtained modified SBR, the bound styrene content was 10 mass%, and the glass transition temperature (Tg) was -65°C.

(Preparation and Evaluation of Vulcanized Rubber)

The obtained rubber compositions of the examples and comparative examples were vulcanized to obtain vulcanized rubber test pieces. The obtained vulcanized rubber test pieces were evaluated for high fuel efficiency, wet braking performance, and wear resistance performance by the following methods.

(1) High Fuel Efficiency

The loss tangent (tanδ) of the test piece was measured under conditions of 50°C, 1% strain, and 52 Hz frequency using a viscoelasticity meter (manufactured by Rheometric Scientific). The test results were indexed by setting the reciprocal of tanδ of Comparative Example 1 to 100. The larger the index value, the smaller the tanδ, indicating better high fuel efficiency.

(2) Wet Braking Performance

The friction coefficient of the test piece against a wet asphalt road surface was measured using a portable friction tester. The test results were indexed by setting the friction coefficient of Comparative Example 1 to 100. The larger the index value, the greater the friction coefficient, indicating better wet braking performance.

(3) Wear Resistance Performance

In accordance with JIS K 6264-2:2005, using a Lambourn abrasion tester manufactured by Ueshima Seisakusho Co., Ltd., sandpaper was attached to the abrasive wheel, and the amount of wear was measured at a slip rate of 15% at room temperature. The test results were indexed by setting the reciprocal of the wear amount of Comparative Example 1 to 100. The larger the index value, the smaller the amount of wear, indicating better wear resistance performance.

[Table 2]

| | | | | Example 1 | Example 2 | Example 3 | Example 4 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|---|---|---|---|
| Blending | Rubber component | Natural rubber *1 | Parts by mass | 30.0 | 30.0 | 30.0 | 30.0 | 30.0 | 30.0 | 30.0 | 30.0 | 30.0 | 30.0 |
| | | SBR1 *2 | | 70.0 | 70.0 | 55.0 | 55.0 | 70.0 | 70.0 | 35.0 | 35.0 | - | - |
| | | SBR2 *3 | | - | - | 15.0 | 15.0 | - | - | 35.0 | 35.0 | - | - |
| | | BR *4 | | - | - | - | - | - | - | - | - | 70.0 | 70.0 |
| | Filler | Carbon block *5 | | 30.0 | 20.0 | 30.0 | 20.0 | 15.0 | 35.0 | 30.0 | 20.0 | 30.0 | 20.0 |
| | | Silica *6 | | 40.0 | 50.0 | 40.0 | 50.0 | 55.0 | 35.0 | 40.0 | 50.0 | 40.0 | 50.0 |
| | Silane coupling agent *7 | | | 4.0 | 5.0 | 4.0 | 5.0 | 5.5 | 3.5 | 4.0 | 5.0 | 4.0 | 5.0 |
| | Resin *8 | | | 25.0 | 25.0 | 25.0 | 25.0 | 25.0 | 25.0 | 25.0 | 25.0 | 25.0 | 25.0 |
| $A^{0.5}+B^{1.5}$ | | | - | 37.1 | 37.1 | 65.7 | 65.7 | 37.1 | 37.1 | 112.2 | 112.2 | 5.5 | 5.5 |
| C/D | | | - | 0.57 | 0.71 | 0.57 | 0.71 | 0.79 | 0.50 | 0.57 | 0.71 | 0.57 | 0.71 |
| Evaluation | High fuel efficiency | | Index | 111 | 113 | 109 | 106 | 100 | 99 | 91 | 107 | 112 | 116 |
| | Wet braking performance | | | 99 | 99 | 103 | 103 | 100 | 100 | 105 | 104 | 78 | 80 |
| | Wear resistance performance | | | 100 | 102 | 95 | 97 | 100 | 105 | 98 | 92 | 106 | 103 |
| | Overall performance | | | 310 | 314 | 307 | 306 | 300 | 304 | 294 | 303 | 296 | 299 |

From Table 1, it can be seen that the rubber compositions for tires of Examples 1 to 4, which satisfy both formula (X) (and formula (Z)) and formula (Y), exhibit an excellent balance among high fuel efficiency, wet braking performance, and wear resistance performance.

On the other hand, the rubber compositions for tires of Comparative Examples 1 and 2 satisfy formula (X) (and formula (Z)) but do not satisfy formula (Y), and thus are inferior in high fuel efficiency or wet braking performance. In addition, the rubber compositions for tires of Comparative Examples 3 to 6 satisfy formula (Y) but do not satisfy formula (X) (and formula (Z)), and thus are inferior in at least one of high fuel efficiency, wet braking performance, or wear resistance performance.

INDUSTRIAL APPLICABILITY

The rubber composition for tires of the present disclosure can be mainly used in the tire manufacturing industry.

## Claims

1. A rubber composition for tires comprising a rubber component and a filler,

   wherein the rubber component comprises at least an isoprene skeleton rubber and a styrene-butadiene rubber,
   the filler comprises at least silica, and
   the following formula (X) and the following formula (Y) are satisfied:

   $$10 \leq A^{0.5}+B^{1.5} \leq 100 \quad \ldots (X)$$

   (where A is a content (parts by mass) of the isoprene skeleton rubber in 100 parts by mass of the rubber component, and B is a bound styrene content (mass%) of the styrene-butadiene rubber), and

   $$0.55 \leq C/D \leq 0.75 \quad \ldots (Y)$$

   (where C is a content (parts by mass) of the silica relative to 100 parts by mass of the rubber component, and D is a content (parts by mass) of the filler relative to 100 parts by mass of the rubber component).

2. The rubber composition for tires according to claim 1, further comprising a resin component.

3. The rubber composition for tires according to claim 1, wherein the styrene-butadiene rubber is modified with a modifier containing nitrogen and silicon.

4. The rubber composition for tires according to claim 1, wherein the styrene-butadiene rubber is modified with a modifier having a functional group containing nitrogen and an alkoxy group.

5. The rubber composition for tires according to claim 1, wherein a content of the isoprene skeleton rubber in 100 parts by mass of the rubber component is more than 0 parts by mass and less than 70 parts by mass.

6. The rubber composition for tires according to claim 1, wherein the following formula (Z) is satisfied:

   $$10 \leq A^{0.5}+B^{1.5} \leq 85 \quad \ldots (Z)$$

   (where A is the content (parts by mass) of the isoprene skeleton rubber in 100 parts by mass of the rubber component, and B is the bound styrene content (mass%) of the styrene-butadiene rubber).

7. The rubber composition for tires according to claim 1, wherein the rubber component does not contain butadiene rubber.

8. The rubber composition for tires according to claim 1, wherein an amount of sulfur in the rubber composition is 2.5 parts by mass or less relative to 100 parts by mass of the rubber component.

**9.** The rubber composition for tires according to claim 1, wherein the styrene-butadiene rubber has a bound styrene content of less than 15 mass%.

**10.** A tread rubber comprising the rubber composition according to claim 1.

**11.** A tire comprising the tread rubber according to claim 10.

## INTERNATIONAL SEARCH REPORT

International application No.
**PCT/JP2023/043332**

**A. CLASSIFICATION OF SUBJECT MATTER**

***C08L 9/06***(2006.01)i; ***B60C 1/00***(2006.01)i; ***C08K 3/36***(2006.01)i; ***C08K 5/544***(2006.01)i; ***C08L 7/00***(2006.01)i
FI: C08L9/06; B60C1/00 A; C08K3/36; C08K5/544; C08L7/00

According to International Patent Classification (IPC) or to both national classification and IPC

**B. FIELDS SEARCHED**

Minimum documentation searched (classification system followed by classification symbols)

C08L9/06; B60C1/00; C08K3/36; C08K5/544; C08L7/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br>Y | JP 7-90122 A (THE YOKOHAMA RUBBER CO., LTD.) 04 April 1995 (1995-04-04)<br>claims, paragraphs [0017], [0018], example 2 | 1, 5-11<br><br>2-4 |
| Y | WO 2022/124340 A1 (BRIDGESTONE CORPORATION) 16 June 2022 (2022-06-16)<br>claims, paragraphs [0025], [0029], [0031], [0046], example 1 | 1-11 |
| Y | JP 2020-186322 A (SUMITOMO RUBBER INDUSTRIES, LTD.) 19 November 2020 (2020-11-19)<br>claims, paragraphs [0018], [0072], [0095], example 3 | 1-11 |
| Y | WO 2020/100628 A1 (BRIDGESTONE CORPORATION) 22 May 2020 (2020-05-22)<br>claims, paragraph [0072], example 1 | 1-11 |
| Y | JP 3-252433 A (BRIDGESTONE CORPORATION) 11 November 1991 (1991-11-11)<br>claims | 3, 4 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 January 2024** | **30 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (July 2022)

**INTERNATIONAL SEARCH REPORT**

International application No.
**PCT/JP2023/043332**

**C. DOCUMENTS CONSIDERED TO BE RELEVANT**

| Category* | Citation of document, with indication, where appropriate, of the relevant passages | Relevant to claim No. |
|---|---|---|
| Y | WO 2006/098103 A1 (BRIDGESTONE CORPORATION) 21 September 2006 (2006-09-21) [0003] | 1-11 |
| Y | JP 2019-131646 A (SUMITOMO RUBBER INDUSTRIES, LTD.) 08 August 2019 (2019-08-08) paragraph [0003] | 1-11 |
| Y | WO 2018/190430 A1 (SUMITOMO RUBBER INDUSTRIES, LTD.) 18 October 2018 (2018-10-18) paragraph [0002] | 1-11 |

**INTERNATIONAL SEARCH REPORT**
**Information on patent family members**

International application No.
**PCT/JP2023/043332**

| Patent document cited in search report | Publication date (day/month/year) | Patent family member(s) | Publication date (day/month/year) |
|---|---|---|---|
| JP 7-90122 A | 04 April 1995 | US 5500482 A<br>claims, column 3, line 46 to column 4, line 7, example 2 | |
| WO 2022/124340 A1 | 16 June 2022 | CN 116685474 A | |
| JP 2020-186322 A | 19 November 2020 | (Family: none) | |
| WO 2020/100628 A1 | 22 May 2020 | EP 3882046 A1<br>claims, paragraphs [0088], [0089], example 1<br>CN 113015629 A | |
| JP 3-252433 A | 11 November 1991 | (Family: none) | |
| WO 2006/098103 A1 | 21 September 2006 | US 2009/0054549 A1<br>[0003]<br>EP 1860146 A1<br>CN 101142268 A | |
| JP 2019-131646 A | 08 August 2019 | (Family: none) | |
| WO 2018/190430 A1 | 18 October 2018 | US 2020/0102448 A1<br>paragraph [0002]<br>EP 3597697 A1<br>CN 110520470 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015079703 A1
- WO 2003046020 A1
- JP 2007217562 A
- JP 2019038728 A


### Non-patent literature cited in the description


- **R. R. HAMPTON**. *Analytical Chemistry*, 1949, vol. 21, 923